(19) Europäisches Patentamt
European Patent Office
Office européen des brevets

(11) Numéro de publication: **0 204 603 B1**

(12) **FASCICULE DE BREVET EUROPEEN**

(45) Date de publication de fascicule du brevet: **07.01.93**

(51) Int. Cl.$^5$: **G06F 15/332**

(21) Numéro de dépôt: **86401069.9**

(22) Date de dépôt: **21.05.86**

(54) **Circuit de calcul rapide de la transformée en cosinus, directe ou inverse, d'un signal discret.**

(30) Priorité: **22.05.85 FR 8507717**

(43) Date de publication de la demande:
**10.12.86 Bulletin 86/50**

(45) Mention de la délivrance du brevet:
**07.01.93 Bulletin 93/01**

(84) Etats contractants désignés:
**BE DE GB IT NL SE**

(56) Documents cités:
**US-A- 4 385 363**

**IEEE TRANSACTIONS ON ELECTROMAGNETIC COMPATIBILITY, vol. EMC-24, no. 2, mai 1982, pages 278-286, IEEE, New York, US; A. JALALI et al.: "A high-speed FDCT processor for real-time processing of NTSC color TV signal"**

(73) Titulaire: **Guichard, Jacques**
**8/10 rue des Morillons**
**F-75015 Paris(FR)**

Titulaire: **Cassimatis, Eric**
**4, Place de Barcelone**
**F-75016 Paris(FR)**

(72) Inventeur: **Guichard, Jacques**
**8/10 rue des Morillons**
**F-75015 Paris(FR)**
Inventeur: **Cassimatis, Eric**
**4, Place de Barcelone**
**F-75016 Paris(FR)**

(74) Mandataire: **Mongrédien, André et al**
**c/o BREVATOME 25, rue de Ponthieu**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 204 603 B1

Rank Xerox (UK) Business Services

## Description

La présente invention a pour objets un circuit de calcul rapide de la transformée en cosinus d'un signal discret et un circuit de calcul rapide de la transformée en cosinus inverse d'un signal discret. Ces transformées sont utilisées notamment dans le traitement des signaux d'images numériques, et en particulier pour le codage et le décodage des images de haute résolution. L'invention concerne les transformées en cosinus discrète, directe ou inverse, dans lesquelles le signal à traiter est représenté par N points. N est de la forme $2^n$, où n est un entier.

De manière générale, la transformée en cosinus d'une suite $(x_i)$, $0 \leqq i \leqq N-1$, représentant le signal discrétisé à traiter, en une suite $(X_i)$,$0 \leqq i \leqq N-1$ est obtenue par une suite d'opérateurs, chaque opérateur recevant de l'opérateur précédent un ensemble de N points et délivrant à l'opérateur suivant un ensemble de N points qui s'obtiennent à partir des points reçus en entrée par des opérations mathématiques simples. Ces opérations mathématiques sont essentiellement des additions et des multiplications auxquelles peuvent s'ajouter éventuellement une permutation.

Dans la présente invention, le circuit de calcul de la transformée en cosinus comporte une suite d'étages, chaque étage réalisant un opérateur et faisant apparaître N nombres intermédiaires, chacun étant une combinaison linéaire d'au plus deux nombres de l'étage précédent.

Chaque opérateur peut être représenté mathématiquement par une matrice de taille NxN. Le circuit de la transformée en cosinus est alors défini par un produit de matrices. Dans le cas où ces matrices sont orthogonales, elles sont facilement inversibles : en effet, leur inverse est égale, éventuellement à un facteur multiplicatif près, à leur transposée. Le circuit de la transformée inverse en cosinus est alors défini par le produit des matrices transposées, prises dans l'ordre inverse de celui du produit des matrices de la transformée directe.

Dans le circuit de l'invention, les matrices de la transformée directe ne sont pas orthogonales. Cependant, le produit de chaque matrice par sa transposée est une matrice diagonale, et on constate que la transformation inverse est définie par le produit desdites matrices transposées, effectué dans l'ordre inverse du produit des matrices de la transformée directe, multiplié par un coefficient égal à $\frac{2}{N}$ . Le circuit de la transformée inverse s'obtient ainsi simplement en inversant l'ordre des étages du circuit de la transformée directe, le coefficient $\frac{2}{N}$ étant soit inclus dans l'un des étages multiplicatifs de la transformée directe soit obtenu au moyen d'un étage multiplicatif supplémentaire.

Un étage additif de la forme a±b, définit la valeur d'un point de sortie comme la somme ou la différence des valeurs de deux points d'entrée. Un étage multiplicatif de la forme $\alpha.a\pm\beta.b$, associe à chaque point de sortie la somme, ou la différence, de la valeur de deux points d'entrée affectés de coefficients prédéterminés $\alpha$ et $\beta$. Cet étage peut être muni de moyens pour échanger les coefficients $\alpha$ et $\beta$ de manière à produire $\alpha a\pm\beta b$ ou $\beta a\pm\alpha b$.

L'opérateur d'un étage peut ne pas s'appliquer à tous les points d'entrée ; la valeur de certains points de sortie est alors simplement égale à la valeur d'un point d'entrée ou à son opposé. Un tel opérateur est dit à état transparent. Le circuit 74181 de Texas Instruments est un exemple d'un additionneur-soustracteur à état transparent.

Sur le plan pratique, un étage additif comporte au moins un additionneur-soustracteur. Un étage multiplicatif est plus complexe puisqu'il requiert au moins un multiplieur avec accumalateur ou un multiplieur avec un additionneur-soustracteur. Ces circuits doivent être rapides pour traiter en temps réel des signaux d'images tels que des signaux vidéo. Ce sont des circuits onéreux.

Le nombre d'additionneur-soustracteurs et de multiplieurs d'un de calcul rapide de la transformée en cosinus est donc un critère particulièrement important dans le domaine de L'invention. Il faut par ailleurs noter que le coût d'un multiplieur est notablement plus important que le coût d'un additionneur et que la diminution du nombre d'étages multiplicatifs dans le circuit est particulièrement recherchée.

On connait un procédé de calcul rapide de la transformée en cosinus par l'article "A fast computational algorithm for the discrete cosine transform " de W.H. CHEN et al paru dans IEEE Transactions on Communications, vol.25, n° 9, sept 1977, pages 1004 à 1009.

Dans cet article, le procédé de calcul rapide de la transformée en cosinus est défini par une matrice $[A_N]$ égale à un produit de matrices de taille NxN. Chaque matrice représente un opérateur et correspond à un étage du circuit.

La matrice $[A_N]$ est égale à ;

$$[P_N] \cdot \begin{bmatrix} A_{N/2} & 0 \\ 0 & R_{N/2} \end{bmatrix} \cdot [B_N]$$

où $[P_N]$ est une matrice de permutation NxN, le bloc $[A_{N/2}]$ est la matrice correspondant à la transformée en cosinus d'un ensemble de N/2 points, le bloc $[R_{N/2}]$ est un produit de 2n-3 matrices, où $n = \log_2 N$, et $[B_N]$ est une matrice dont les termes situés sur les deux diagonales sont égaux à ±1, Les autres termes étant nuls.

Les 2n-3 matrices se décomposent en n-1 matrices multiplicatives et n-2 matrices additives. Les matrices additives sont celles dans lesquelles les coefficients non nuls sont égaux à ±1. Les matrices multiplicatives comportent des termes en sinus ou en cosinus.

Le circuit de transformée en cosinus décrit dans cet article comprend donc n-1 étages multiplicatifs et n-1 étages additifs, en tenant compte de l'étage correspondant à la matrice $[B_N]$. On ne compte pas d'étage pour matrice de permutation $P_N$ qui ne constitue pas un calcul proprement dit.

Le circuit connu de calcul rapide de la transformée en cosinus qui vient d'être décrit a été légèrement modifié pour un traitement pipe-line. Ces modifications consistent essentiellement à retarder d'un ou plusieurs étages le calcul effectué sur certains points de l'ensemble des N points traités et à prévoir des opérateurs à 4 entrées. Ceci permet de faire travailler en parallèle tous les étages du circuit mettant en oeuvre le procédé.

On pourra se reporter à l'article "A high-speed FDCT processor for real-time processing of NTSC color TV signal", de A. JALALI et K.R. RAO paru dans IEEE Transactions on Electromagnetic Compatibility, vol.24, n° 2, mai 1982, pages 278 à 286 pour une description plus détaillée de ce circuit.

L'invention a pour objet un circuit de calcul rapide de la transformée en cosinus comportant un nombre d'étages inférieur au nombre d'étages des circuits connus. Le gain d'étages dans le circuit de l'invention porte principalement sur les étages multiplicatifs. Ceci est important du point de vue économique car, ainsi qu'on l'a souligné plus haut, le prix d'un multiplieur est particulièrement élevé.

Le gain d'un étage est atteint pour $N \geq 32$, où $N = 2^n$ et n est un entier.

Un autre art antérieur est constitué pour le brevet US-A-4 385 363 dans lequel un circuit de calcul de transformée 53, en cosinus pour un ensemble N = 16 points (n = 4) est décrit . L'architecture et le graphe décrits ne permettent pas d'obtenir à partir de ce circuit de taille N/2 , un circuit de taille N tel que le propose l'invention .

L'invention a pour objet un circuit de calcul rapide de la transformée en cosinus dans lequel les étages, sauf un premier étage d'addition, se composent de deux demi-étages indépendants appelés demi-étage supérieur et demi-étage inférieur, la suite des demi-étages supérieurs permettant le calcul des composantes d'indice pair de la transformée en cosinus et la suite des demi-étages inférieurs permettant le calcul des composantes d'indice impair de la transformée en cosinus.

Par demi-étages indépendants, on entend qu'un signal délivré, par exemple, par un demi-étage supérieur ne dépend que de signaux reçus de ce demi-étage supérieur.

Cette structure présente l'avantage de construire un circuit de calcul rapide de la transformée en cosinus de taille N à partir d'un circuit de calcul rapide de la transformée en cosinus de taille $\frac{N}{2}$ , et ainsi, par récurrence, de permettre un circuit pour une taille N quelconque.

De manière précise, l'invention a pour objet un circuit de calcul rapide de la transformée en cosinus $(X_i)$, $0 \leq i \leq N-1$, où $N = 2^n$, $n \geq 4$, d'un signal discrétisé défini par une suite $(x_i)$, $0 \leq i \leq N-1$, caractérisé en ce qu'il met en oeuvre des graphes standards (figures 3a, 4a, 5a) et en ce qu'il comprend pour cela:

- un premier étage d'addition recevant la suite $(x_j)$, $0 \leq j \leq N-1$, et délivrant une première suite $(x_j^0)$, $0 \leq j \leq \frac{N}{2}-1$, où

$$x_j^0 = x_j + x_{N-1-j},$$

  et une seconde suite $(y_j)$, $0 \leq j \leq \frac{N}{2}-1$, où $y_j = x_j = x_j - x_N - 1 - j$ ;
- un ensemble de demi-étages supérieurs reliés en série, le premier demi-étage supérieur recevant la

première suite ($x_j^0$), $0 \leq j \leq \frac{N}{2} -1$, et le dernier demi-étage supérieur délivrant la suite ($X_{2q}$), $0 \leq q \leq \frac{N}{2} -1$, des composantes d'indice pair de la transformée en cosinus, le signal délivré sur chaque sortie de chaque demi-étage étant obtenu par combinaison linéaire d'au plus deux signaux appliqués sur chacune de ses entrées, ledit ensemble de demi-étages supérieurs étant défini par récurrence sur la taille N,ledit ensemble de demi-étages supérieurs constituant un circuit de transformée en cosinus pour N/2 points, ledit circuit comprenant en série, pour N = 8, un étage d'addition, un étage de multiplication, un étage d'addition et un étage de multiplication ;

- un ensemble de demi-étages inférieurs reliés en série, le premier demi-étage inférieur recevant la seconde suite ($y_j$), $0 \leq j \leq \frac{N}{2} -1$, et le dernier demi-étage inférieur délivrant la suite ($X_{2q+1}$), $0 \leq q \leq \frac{N}{2} -1$, des composantes d'indice impair de la transformée en cosinus, le signal délivré sur chaque sortie de chaque demi-étage étant obtenu par combinaison linéaire d'au plus deux signaux appliqués sur chacune de ses entrées, l'ensemble de demi-étages inférieurs comprenant en série :

a) un premier demi-étage inférieur d'addition délivrant une troisième suite ($x_j^3$), $0 \leq j \leq \frac{N}{8} -1$, où

$$x_j^3 = y_{4j+2} + y_{4j+1},$$

une quatrième suite ($x_j^1$), $0 \leq j \leq \frac{N}{4} -1$, où

$$x_j^1 = y_{4j}$$

pour $j \leq \frac{N}{8} -1$ et

$$x_j^1 = -y_{N-4j-1}$$

pour $j > \frac{N}{8} -1$, et une cinquième suite ($x_j^2$), $0 \leq j \leq \frac{N}{8} -1$ où

$$x_j^2 = y_{4j+2} - y_{4j+1},$$

b) une suite de demi-étages inférieurs d'addition ou de multiplication délivrant une sixième suite ($\alpha_{2q+1}$), $0 \leq q \leq \frac{N}{8} -1$, égale aux parties réelles des composantes d'indice impair de la transformée de Fourier d'ordre $\frac{N}{2}$ de la quatrième suite, une septième suite ($\beta_{2q+1}$), $0 \leq q \leq \frac{N}{8} -1$ égale aux parties imaginaires des composantes d'indice impair de la transformée de Fourier d'ordre $\frac{N}{2}$ de la quatrième suite, une huitième suite ($\delta_{2q+1}$), $0 \leq q \leq \frac{N}{8} -1$ égale aux composantes d'indice impair de la transformée en sinus d'ordre $\frac{N}{4}$ de la cinquième suite, une neuvième suite ($\gamma_{2q+1}$), $0 \leq q \leq \frac{N}{8} -1$ égale aux composantes d'indice impair de la transformée en cosinus d'ordre $\frac{N}{4}$ de la troisième suite,

c) un deuxième demi-étage inférieur d'addition pour délivrer les suites ($\alpha_{2q+1} + \gamma_{2q+1}$), $0 \leq q \leq \frac{N}{8} -1$, ($\alpha_{2q+1} - \gamma_{2q+1}$), $0 \leq q \leq \frac{N}{8} -1$, ($\beta_{2q+1} + \delta_{2q+1}$), $0 \leq q \leq \frac{N}{8} -1$, et ($\beta_{2q+1} - \delta_{2q+1}$), $0 \leq q \leq \frac{N}{8} -1$,

d) un demi-étage inférieur de multiplication délivrant la suite ($X_{2q+1}$), $0 \leq q \leq \frac{N}{2} -1$, des composantes d'indice impair de la transformée en cosinus d'ordre N de la suite ($x_j$), $0 \leq j \leq N-1$.

De manière préférée, les ensembles de demi-étages supérieurs et de demi-étages inférieurs comprennent un nombre identique de demi-étages d'addition.

De manière préférée, l'ensemble de demi-étages supérieurs et l'ensemble de demi-étages inférieurs comprennent un nombre identique de demi-étages de multiplication, certains demi-étages de multiplication étant éventuellement égaux à l'opération identité.

De manière préférée, un demi-étage supérieur de rang déterminé et le demi-étage inférieur de même rang sont du même type, c'est-à-dire tous les deux des étages de multiplication.

De manière préférée, la suite de demi-étages inférieurs, délivrant la sixième suite égale aux parties réelles des composantes d'indice impair de la transformée de Fourier d'ordre $\frac{N}{2}$ de la quatrième suite, est composée d'étages d'addition et de multiplication dont le nombre, l'ordre et le type sont ceux d'un circuit de transformée en cosinus pour une suite de $\frac{N}{4}$ points, ledit circuit comprenant pour N = 4, un étage

d'addition et un étage de multiplication.

De manière préférée, chaque ensemble de demi-étages comprend n-2 demi-étages d'addition et

$$E\left(\frac{n+1}{2}\right)$$

demi-étages de multiplication, où E est la fonction partie entière, certains demi-étages de multiplication étant éventuellement égaux à l'opération identité.

L'invention a également pour objet un circuit de calcul rapide de la transformée inverse en cosinus d'un signal discret comme définie dans la revendication 10. Ce circuit s'obtient aisément à partir du circuit de la transformée directe. On constate en effet que la suite des étages du circuit de la transformée directe, prise dans l'ordre inverse de celle de la transformée directe, constitue à un facteur multiplicatif près égal à $\frac{2}{N}$ , un circuit de transformée inverse en cosinus. La démonstration de cette propriété, bien que ne présentant mathématiquement aucune difficulté, sort du cadre de cette description. Cette démonstration repose sur le fait que le produit de la matrice associée à chaque étage de la transformée directe par sa transposée est égale à une matrice diagonale. Le coefficient multiplicatif $\frac{2}{N}$ peut être intégré dans l'un des étages multiplicatifs de la transformée directe ; il peut aussi être pris en compte sous la forme d'un étage multiplicatif supplémentaire, qui peut être par exemple en position terminale.

De par sa structure analogue à celle du circuit de la transformée directe, il apparaît à l'évidence que le circuit de la transformée inverse peut être construit par récurrence pour des valeurs de N successives.

Les coefficients de la matrice associée à un étage de la transformée directe sont en général contenus dans une mémoire morte. Cette mémoire ne peut pas être utilisée pour l'étage correspondant de la transformée inverse, sauf si des moyens sont prévus pour modifier l'adressage de la mémoire afin d'échanger les lignes et les colonnes de la matrice des coefficients. Il peut paraître plus simple de remplacer la mémoire morte contenant la matrice de la transformée directe par une autre mémoire morte contenant la matrice transposée. Le même étage peut donc être utilisé pour la transformée directe ou pour la transformée inverse par simple changement de la mémoire morte contenant les coefficients de la matrice.

De manière précise, l'invention a pour objet un circuit de calcul rapide de la transformée inverse en cosinus $(x_i)$, $0 \leqq i \leqq N-1$ d'un signal discrétisé défini par une suite $(X_i)$, $0 \leqq i \leqq N-1$, où $N = 2^n$ et n est un nombre supérieur ou égal à 4, ledit circuit étant caractérisé en ce qu'il comprend:

- un ensemble de demi-étages supérieurs recevant la suite $(X_{2q})$, $0 \leqq q \leqq \frac{N}{2}$ -1 des composantes d'indice pair de la transformée en cosinus et délivrant une première suite $(x_j^0)$, $0 \leqq j \leqq \frac{N}{2}$ -1,
- un ensemble de demi-étages inférieurs recevant la suite $(X_{2q+1})$, $0 \leqq q \leqq \frac{N}{2}$ -1 des composantes d'indice impair de la transformée en cosinus et délivrant une seconde suite $(x_j^1)$, $0 \leqq j \leqq \frac{N}{2}$ -1, et
- un étage final d'addition recevant la première suite $(x_j)$ et la seconde suite $(x_j^1)$ et délivrant la suite $(x_j)$, $0 \leqq j \leqq N-1$, chaque demi-étage supérieur, chaque demi-étage inférieur et l'étage final d'addition effectuant respectivement l'opération mathématique inverse de celle effectuée par le demi-étage supérieur de même rang, compté dans l'ordre inverse, et le premier étage d'addition du circuit de calcul rapide de la transformée en cosinus directe.

De manière préférée, le circuit de calcul rapide de la transformée directe ou inverse comprend une mémoire d'au moins N cellules de mémorisation entre le premier étage d'addition et les ensembles de demi-étages supérieur et inférieur et une mémoire d'au moins $\frac{N}{2}$ cellules de mémorisation entre chaque demi-étage.

Selon un autre mode de réalisation, le circuit de calcul rapide de la transformée directe ou inverse comprend une mémoire double comportant deux séries d'au moins N cellules de mémorisation entre le premier étage d'addition et les ensembles de demi-étages supérieur et inférieur et une mémoire double comportant deux séries d'au moins $\frac{N}{2}$ cellules de mémorisation entre chaque demi-étage.

Ces mémoires doubles permettent un traitement de type "pipe-line", l'une des séries de N/2 cellules recevant les N/2 valeurs délivrées par le demi-étage précédent et l'autre série de N/2 cellules délivrant N/2 valeurs au demi-étage suivant. Les deux séries de cellules d'une mémoire double fonctionnent en mode bascule ou ping-pong, c'est-à-dire que les N/2 valeurs délivrées par le demi-étage précédent sont dirigées alternativement vers l'une des séries et vers l'autre série.

De manière préférée, le circuit de l'invention comprend également une mémoire à N cellules de mémorisation devant le premier étage.

Les caractéristiques et avantages de l'invention ressortiront mieux de la description qui va suivre, donnée à titre illustratif mais nullement limitatif, en référence aux dessins annexés, sur lesquels:

- la figure 1 est un tableau illustrant, pour différentes valeurs de N, le nombre d'étages d'addition et de multiplication dans un circuit pour le calcul rapide de la transformée en cosinus selon le procédé connu de CHEN et selon le procédé de l'invention,
- la figure 2 est un graphe rappelant la représentation conventionnelle des opérations d'addition et de multiplication par un treillis,
- la figure 3a représente schématiquement le treillis associé au circuit de transformée en cosinus selon l'invention et illustre la construction de ce treillis par récurrence sur le nombre N de points de signal traité,
- la figure 3b illustre la structure de la moitié inférieure du treillis de la figure précédente qui produit les composantes d'indice impair de la transformée en cosinus,
- la figure 4a représente schématiquement un treillis associé au circuit de l'invention dans le cas n = 16,
- les figures 4b et 4c représentent respectivement des treillis produisant les composantes d'indice pair et les composantes d'indice impair de la transformée en cosinus selon le treillis de la figure 4a,
- la figure 5a représente schématiquement un treillis associé au circuit de l'invention dans le cas N = 32,
- les figures 5b et 5c représentent respectivement des treillis produisant les composantes d'indice pair et les composantes d'indice impair de la transformée en cosinus selon le treillis de la figure 5a,
- la figure 6 est un dessin schématique d'un mode de réalisation du circuit de l'invention,
- la figure 7 représente un premier mode de réalisation d'un étage d'addition du circuit de la figure 6,
- la figure 8 représente un second mode de réalisation d'un étage d'addition du circuit de la figure 6,
- la figure 9 représente un premier mode de réalisation d'un étage de multiplication du circuit de la figure 6,
- la figure 10 représente un second mode de réalisation d'un étage de multiplication du circuit de la figure 6,
- la figure 11 représente un treillis associé au circuit de transformée en cosinus inverse selon l'invention dans le cas N = 16, et
- la figure 12 est un dessin schématique d'un circuit conforme à l'invention pour le calcul rapide de la transformée inverse correspondant au treillis de la figure 10.

Le tableau représenté sur la figure 1 indique, pour différentes valeurs de N, le nombre d'étages du circuit de calcul rapide de la transformée en cosinus, selon l'article de CHEN cité plus haut, et selon l'invention.

Pour chacun de ces circuits, on a indiqué respectivement le nombre d'étages de multiplication notés ⊗ , le nombre d'étages d'addition notés ⊕ , et le nombre d'étages total noté E.

On constate que pour n = 2 ou n = 3, les deux circuits comportent les mêmes étages. En revanche, pour n≧4 ce qui correspond aux valeurs les plus fréquemment utilisées en pratique, le circuit de l'invention comporte au moins un étage de multiplication de moins que le circuit connu décrit dans l'article de CHEN.

De manière générale, le nombre d'étages de multiplication est de l'ordre de n dans le circuit de CHEN et de l'ordre de 3n/4 dans le circuit de l'invention. Le gain d'étages de multiplication est donc de l'ordre de 25%, ce qui est considérable.

Pour le cas N = 16, 32, 64, le nombre d'étages d'addition est identique dans le circuit de CHEN et dans le circuit de l'invention. Le nombre d'étages d'addition dans le circuit de CHEN étant égal au nombre d'étages de multiplication et le nombre d'étages d'addition dans le circuit de l'invention étant égal, éventuellement à une unité près, au nombre d'étages de multiplication, il apparaît également un gain moyen de 25% d'étages d'addition dans le circuit de l'invention. Ce gain n'est effectif qu'à partir de la valeur N = 128.

On va maintenant décrire le circuit de l'invention pour plusieurs valeurs de N en utilisant la représentation conventionnelle sous forme de treillis. On va tout d'abord rappeler rapidement, en référence à la figure 2, les notations utilisées dans un treillis.

Le treillis de la figure 2 représente un opérateur à cinq points d'entrée et cinq points de sortie. Cet opérateur reçoit en entrée cinq valeurs $a_1$, $a_2$, $a_3$, $a_4$ et $a_5$ et délivre en sortie cinq autres valeurs $b_1$, $b_2$, $b_3$, $b_4$ et $b_5$. L'opérateur est représenté par un ensemble d'arcs reliant chacun un point d'entrée à un point de sortie. Ces arcs son affectés d'un coefficient : $\alpha$, $\beta$, -1. Pour simplifier la représentation, ou convient de ne pas indiquer le coefficient lorsqu'il est égal à +1. Le coefficient associé à un arc est un coefficient multiplicatif.

L'opérateur de la figure 2 réalise les opérations suivantes :

$b_1 = \alpha a_1 + \beta a_2$
$b_2 = a_1 + a_2$,
$b_3 = a_3$,

$b_4 = a_4 - a_5$,
$b_5 = -a_4 + a_5$.

Un opérateur est dit additif si tous les coefficients associés aux arcs sont égaux à -1 ou +1. Dans le cas contraire, l'opérateur est dit multiplicatif.

Pour faciliter la lecture des treillis qui vont suivre et qui illustrent le circuit de calcul rapide de la transformée en cosinus de l'invention, on va tout d'abord formaliser les opérations effectuées dans chaque treillis. Pour cela, on considère une famille $(x_i)$, $0 \leq i \leq N-1$, qui, traitée par le circuit de l'invention, est transformée en une famille $(X_i)$, $0 \leq i \leq N-1$,, où les éléments $X_i$ sont définis de la façon suivante:

$$X_i = \frac{2.c(i)}{N} \sum_{j=0}^{N-1} x_j . \cos \frac{2\pi(2j+1)i}{4N} \quad , \; 0 \leqslant i \leqslant N-1$$

où c(i) est égal à $1/\sqrt{2}$ si $i=0$ et à 1 si $i \neq 0$.

La composante $X_i$, où $0 \leq i \leq N-1$, de la transformée en cosinus discrète d'ordre N d'une famille $(x_j)$, $0 \leq j \leq N-1$, sera notée dans la suite TCD(i, N, x).

La formule inverse s'écrit :

$$x_j = \sum_{i=0}^{N-1} .c(i).X_i.\cos \frac{2\pi(2j+1)i}{4N}, \; 0 \leqslant j \leqslant N-1$$

où c(i) est égal à $1/\sqrt{2}$ si $i=0$ et à 1 si $i \neq 0$.

Le calcul de la composante $X_i$ de la transformée en cosinus discrète selon l'invention utilise deux expressions différentes selon la parité de i. Ces expressions sont les suivantes :

$X_{2p} = TCD(2p,N,x) = TCD(p,\frac{N}{2},x^0)$

où $x^0 = (x_i + x_{N-i-1}), 0 \leq i \leq \frac{N}{2} - 1$

$$X_{2p+1} = \cos\frac{2\pi(2p+1)}{4N} . \left[\cos TFD(2p+1,\frac{N}{2}, x^1) + TCD(2p+1,\frac{N}{4},x^3)\right]$$

$$- \sin\frac{2\pi(2p+1)}{4N} . \left[\sin TFD(2p+1,\frac{N}{2},x^1) + TSD(2p+1,\frac{N}{4},x^2)\right]$$

où $\cos TFD(2p+1,\frac{N}{2},x^1)$ et $\sin TFD(2p+1,\frac{N}{2},x^1)$ notent respectivement la partie réelle et la partie imaginaire de la composante d'indice 2p+1 de la transformée de Fourier discrète d'ordre $\frac{N}{2}$ de la famille $x^1$, et où TSD signifie transformée en sinus discrète.

Les familles $x^1$, $x^2$ et $x^3$ qui apparaissent dans l'expression de la composante $X_{2p+1}$ sont définies de la manière suivante :

$$y_j = x_j - x_{N-j-1} \qquad 0 \leqslant j \leqslant \frac{N}{2}-1$$
$$x_j^1 = y_{4j} \text{ si } 0 \leqslant j \leqslant \frac{N}{8}-1 \text{ et } x_j^1 = -y_{N-4j-1} \text{ si } \frac{N}{8} \leqslant j \leqslant \frac{N}{4}-1$$
$$x_j^2 = y_{4j+2} - y_{4j+1} \qquad 0 \leqslant j \leqslant \frac{N}{8}-1$$
$$x_j^3 = y_{4j+2} + y_{4j+1} \qquad 0 \leqslant j \leqslant \frac{N}{8}-1$$

La relation $X_{2p} = TCD(p, \frac{N}{2}, x^o)$ montre que l'ensemble des composantes d'indice pair d'une transformée en cosinus d'une suite x de taille N est égal à l'ensemble des composantes de la transformée en cosinus d'une suite $x^o$ de taille $\frac{N}{2}$.

En d'autres termes, pour un treillis de taille N, l'ensemble des composantes d'indice pair de la transformée s'obtient directement en appliquant le treillis de taille N/2 à la suite $x^o$, déduite de la famille x.

De même, le calcul des composantes d'indice impair $X_{2p+1}$ d'une suite x de N points fait appel à la transformée en cosinus d'une suite $x^3$ de $\frac{N}{8}$ points, ainsi qu'à la transformée en sinus et à la transformée de Fourier qui sont proches, du point de vue structurel, de la transformée en cosinus.

Il apparaît donc que le treillis de la transformée en cosinus peut être construit par récurrence sur N. On va d'abord décrire en référence aux figures 3a et 3b la structure d'un treillis de taille N correspondant à la transformée en cosinus selon l'invention mettant en oeuvre cette récurrence. On décrira ensuite des treillis correspondant aux cas particuliers N = 16 et N = 32, ces treillis servant de base à la construction des treillis de tailles supérieures.

La figure 3a représente schématiquement un treillis correspondant au calcul de la transformée en cosinus, selon l'invention, d'une suite $(x_i)$, $0 \leq i \leq N-1$ de taille N. Ce treillis est composé de trois opérations référencées 2, 4 et 6.

L'opération 2 est une addition et correspond à un étage unique. Elle transforme la suite $(x_j)$, $0 \leq j \leq N-1$ en deux suites $(x_j^0)$, $0 \leq j \leq \frac{N}{2}-1$, et $(y_j)$, $0 \leq j \leq \frac{N}{2}-1$ selon les équations :

$$x_j^o = x_j + x_{N-1-j}$$
$$y_j = +x_j - x_{N-1-j} \qquad 0 \leqslant j \leqslant \frac{N}{2}-1$$

Les opérations 4 et 6 sont parallèles, l'opération 4 produisant la suite ($X_{2q}$, $0 \leq q \leq \frac{N}{2}-2$ des composantes d'indice pair de la transformée en cosinus à partir de la suite $(x_j^0)$, $0 \leq j \leq \frac{N}{2}-1$ et l'opération 6 produisant la suite $(X_{2q+1})$, $0 \leq q \leq \frac{N}{2}-1$ des composantes d'indice impair de la transformée en cosinus à partir de la suite $(y_j)$, $0 \leq j \leq \frac{N}{2}-1$.

Les opérations 4 et 6 sont réalisées par un ensemble d'étages ayant chacun N points d'entrée et N points de sortie, chaque point de sortie de chaque étage recevant un signal obtenu par combinaison linéaire d'au plus deux signaux reçus sur des points d'entrée dudit étage.

Chaque étage se comporte comme une juxtaposition de deux demi-étages de même type, additif ou multiplicatif, ayant chacun $\frac{N}{2}$ points d'entrée et $\frac{N}{2}$ points de sortie. On appelle demi-étage supérieur la partie d'un étage associée à l'opération 4 et demi-étage inférieur la partie d'un étage associée à l'opération 6.

L'opération 4 est réalisée par un circuit de transformée en cosinus de taille $\frac{N}{2}$ conforme à l'invention, ainsi qu'il résulte de l'expression déjà citée des composantes $X_{2q}$, ou $0 \leq q \leq \frac{N}{2}-1$, en fonction de la suite $(x_j^0)$ $0 \leq j \leq N-1$ : $X_{2q} = TCD(q, \frac{N}{2}, x^o)$. Par hypothèse de récurrence, la structure de ce circuit de taille $\frac{N}{2}$ est supposée établie.

Ainsi que le montre l'expression des composantes $X_{2q+1}$, où $0 \leq q \leq \frac{N}{2}-1$, de la transformée en cosinus, l'opération 6 fait apparaître des quantités telles que la transformée en cosinus et la transformée en sinus de taille $\frac{N}{4}$, et la transformée de Fourier de taille $\frac{N}{2}$.

L'opération 6 peut ainsi être décomposée en un ensemble d'opérations plus simples. La figure 3b illustre cette décomposition. L'opération 6 comprend :

a) - une opération d'addition 8 recevant la suite $(y_j)$, $0 \leq j \leq \frac{N}{2}-1$ et délivrant trois suites $(x_j^1)$, $0 \leq j \leq \frac{N}{4}-1$, $(x_j^2)$, $0 \leq j \leq \frac{N}{8}-1$ et $(x_j^3)$, $0 \leq j \leq \frac{N}{8}-1$, ces suites étant définies par les relations suivantes :

$$
\begin{aligned}
x_j^1 &= y_{4j} \quad \text{si } 0 \leqslant j \leqslant \tfrac{N}{8}-1 \\
&= -y_{N-4J-1} \quad \text{si } \tfrac{N}{8} \leqslant j \leqslant \tfrac{N}{4}-1 \\
x_j^2 &= y_{4j+2} - y_{4j+1} \\
x_j^3 &= y_{4j+2} + y_{4j+1}
\end{aligned}
$$

b) - une opération 10 recevant la suite $x^3$ et délivrant les composantes de la transformée en cosinus d'ordre $\frac{N}{4}$ de cette suite. Compte tenu de symétries, les N/2 nombres délivrés par cette opération, égaux à TCD(2q + 1, N/4, $X^3$) pour q compris entre 0 et $\frac{N}{2}$ -1, se ramènent à N/8 nombres différents notés $(\gamma_{2q+1}), 0 \leqq q \leqq \frac{N}{8}-1$,

c) - une opération 12 recevant la suite $x^1$ et délivrant les parties réelles des composantes d'indice impair de la transformée de Fourier discrète d'ordre N/2 de cette suite. Compte tenu de symétries, les N/2 nombres délivrés par cette opération, égaux à cosTFD(2q + 1,N/2,$x^1$) pour q compris entre 0 et $\frac{N}{2}$ -1, se ramènent à N/8 nombres différents notés $(\alpha_{2q+1}), 0 \leqq q \leqq \frac{N}{8}-1$,

d) - une opération 14 recevant la suite $x^1$ et délivrant les parties imaginaires des composantes d'indice impair de la transformée de Fourier discrète d'ordre N/2 de cette suite. Compte tenu de symétries, les N nombres délivrés par cette opération, égaux à sinTFD (2q + 1,N/2,$x^1$) pour q compris entre 0 et $\frac{N}{2}$ -1, se ramènent à $\frac{N}{8}$ nombres différents notés $(\beta_{2q+1})$, $0 \leqq q \leqq \frac{N}{8}-1$,

e) - une opération 16 recevant la suite $x^2$ et délivrant les composantes de la transformée en sinus d'ordre $\frac{N}{4}$ de cette suite. Compte tenu de symétries, les N/2 nombres délivrés par cette opération, égaux à TSD-(2q + 1,N/4,$x^2$) pour q compris entre 0 et $\frac{N}{2}$ -1, se ramènent à N/8 nombres différents notés $(\delta_{2q+1}), 0 \leqq q \leqq \frac{N}{8}$ -1,

f) - une opération 18 recevant les suites impaires $\alpha$, $\beta$, $\gamma$ et $\delta$, et délivrant les suites impaires $\lambda$, $\mu$, $\nu$ et $\rho$ selon les équations suivantes :

$$
\begin{aligned}
\lambda_{2q+1} &= \alpha_{2q+1} - \gamma_{2q+1} \\
\mu_{2q+1} &= \alpha_{2q+1} + \gamma_{2q+1} \\
\nu_{2q+1} &= \beta_{2q+1} + \delta_{2q+1} \\
\rho_{2q+1} &= \beta_{2q+1} - \delta_{2q+1}
\end{aligned}
$$

avec $0 \leqq q \leqq \frac{N}{8}-1$

g) - une opération 20 recevant les suites impaires $\lambda$, $\mu$, $\nu$ et $\rho$ et délivrant les composantes d'indice impair de la transformée en cosinus, cette opération étant définie par les relations suivantes :

$$
\begin{aligned}
X_{N/2+(2q+1)} &= c\left(\frac{N+2q+1}{8}\right).\lambda_{2q+1} + s\left(\frac{N+2q+1}{8}\right).\rho_{2q+1} \\
X_{2q+1} &= c\left(\frac{2q+1}{8}\right).\mu_{2q+1} + s\left(\frac{2q+1}{8}\right).\nu_{2q+1} \\
X_{N-(2q+1)} &= -c\left(\frac{2q+1}{8}\right).\mu_{2q+1} - c\left(\frac{2q+1}{8}\right).\nu_{2q+1} \\
X_{N/2-(2q+1)} &= c\left(\frac{N-(2q+1)}{8}\right).\lambda_{2q+1} - s\left(\frac{N-(2q+1)}{8}\right).\rho_{2q+1}
\end{aligned}
$$

$$\text{avec } 0 \leqslant q \leqslant \frac{N}{8}-1 \text{ et où } c\left(\frac{k}{8}\right) = \cos\frac{2\pi k}{8N} \text{ et } s\left(\frac{k}{8}\right) = \sin\frac{2\pi k}{8N}.$$

Les symétries qui permettent de réduire à N/8 le nombre des points de sortie des opérations 10, 12, 14 et 16 résultent directement des expressions TCD, TSD, cosTFD et sinTFD.

Par exemple, TCD(2q + 1 + N/2,N/4,$x^3$) s'écrit

$$\sum_{j=0}^{N/8-1} x_j^3 . \cos\left[\frac{2\pi(2j+1)(2q+1)}{N} + \pi(2q+1)\right]$$

c'est-à-dire -TCD(2q + 1,N/4,$x^3$).

De manière générale, on a ainsi les relations suivantes pour $0 \leq q \leq \frac{N}{8}$ -1 :

$$\begin{aligned} \gamma_{2q+1} &= TCD(2q+1,N/4,x^3) \\ &= -TCD(\tfrac{N}{2}-(2q+1),N/4,x^3) \\ &= -TCD(\tfrac{N}{2}+(2q+1),N/4,x^3) \\ &= TCD(N-(2q+1),N/4,x^3) \end{aligned}$$

De même,

$$\begin{aligned} \alpha_{2q+1} &= \cos TFD(2q+1,N/2,x^1) \\ &= \cos TFD(\tfrac{N}{2}-(2q+1),N/2,x^1) \\ &= \cos TFD(\tfrac{N}{2}+(2q+1),N/2,x^1) \\ &= \cos TFD(N-(2q+1),N/2,x^1) \\ \beta_{2q+1} &= \sin TFD(2q+1,N/2,x^1) \\ &= -\sin TFD(\tfrac{N}{2}-(2q+1),N/2,x^1) \\ &= \sin TFD(\tfrac{N}{2}+(2q+1),N/2,x^1) \\ &= -\sin TFD(N-(2q+1),N/2,x^1) \\ \delta_{2q+1} &= TSD(2q+1,N/4,x^2) \\ &= TSD(\tfrac{N}{2}-(2q+1),N/4,x^2) \\ &= -TSD(\tfrac{N}{2}+(2q+1),N/4,x^2) \\ &= -TSD(N-(2q+1),N/4,x^2) \end{aligned}$$

Il est intéressant de remarquer que les suites impaires $\lambda$ et $\mu$ représentent les parties réelles des composantes d'indice impair de la transformée de Fourier d'une suite $x^5$ définie par : $x_j^5 = y_{2j}$ si $0 \leq j \leq \frac{N}{4}$ -1 et

$$x_j^5 = -y_{N-2j-1}$$

si $N/4 \leq j \leq \frac{N}{2}$ -1. Ces composantes sont cosTFD(2q + 1,N,$x^5$), pour q compris entre 0 et $\frac{N}{2}$ -1.

De même, les suites impaires $\nu$ et $\rho$ représentent les parties imaginaires des composantes d'indice impair de la transformée de Fourier de la suite $x^5$ et sont notées, sinTFD(2q + 1,N,$x^5$) pour q compris entre 0 et $\frac{N}{2}$ -1.

Les opérations 12 et 14 peuvent ainsi être construites par récurrence sur N. Par ailleurs, l'opération 16 est structurellement identique à l'opération 10 et peut également se construire par récurrence.

Enfin, on peut vérifier que les opérations 12, 14, 16 comportent un nombre d'étages inférieur ou égal au nombre d'étages de l'opération 10 et que pour chacune des opérations ces étages sont du même type (additif ou multiplicatif).

La récurrence peut donc être bâtie sur le nombre d'étages nécessaires pour réaliser l'opération 10. Cette opération qui calcule les composantes impaires de la transformée en cosinus de taille N/4 est réalisée par une suite d'étages égale aux étages de calcul de la transformée en cosinus complète privée de l'étage d'addition initial. Comme l'opération 8 est une addition, on peut dire que les opérations 8 et 10 nécessitent un ensemble d'étages identique à l'ensemble des étages d'un circuit de la transformée en cosinus de taille N/4.

Ainsi, ayant un ensemble d'étages formant un circuit de transformée en cosinus de taille N/4 (correspondant aux opérations 8 et 10), il suffit d'ajouter deux étages d'addition et un étage de multiplication (correspondant respectivement aux opérations 2, 18 et 20) pour obtenir un circuit de calcul de la transformée en cosinus de taille N.

Les figures 3a et 3b illustrent le graphe de la transformée directe en cosinus. Le graphe de la transformée inverse s'en déduit aisément. Il suffit de reprendre les opérations dans l'ordre inverse, en remplaçant ces opérations par les opérations transposées, celles-ci étant définies comme étant les opérations dont les matrices associées sont les transposées des matrices associées aux opérations de la transformée directe.

On va maintenant décrire successivement un treillis correspondant au cas N=16 et un treillis correspondant au cas N=32.

Les figures 4a, 4b et 4c représentent un treillis de la transformée en cosinus pour le cas N=16. Ce treillis peut être décomposé en trois opérations référencées respectivement 22, 24 et 26 (figure 4a). L'opération 22 est l'opération d'addition initiale commune à tous les treillis. Cette étape consiste à transformer la suite $(x_j)$, $0 \leqq j \leqq 15$, en une suite $(c_j)$, $0 \leqq j \leqq 15$, $c_j = x_j + x_{15-j}$, $c_{8+J} = +x_j - x_{15-j}$, où $0 \leqq j \leqq 7$.

L'opération 24 appliquée à la suite $(c_j)$, $0 \leqq j \leqq 7$ est représentée sur la figure 4b par le treillis de la transformée en cosinus de taille N=8, selon l'invention. Cette opération 24 délivre les composantes d'indice pair de la transformée en cosinus dans l'ordre suivant : $X_0$, $X_8$, $X_4$, $X_{12}$, $X_2$, $X_{10}$, $X_8$ et $X_{14}$.

Ce treillis comporte successivement quatre étapes, une addition, une multiplication, une addition et une multiplication. La première addition délivre huit valeurs $d_0$, $d_1$, ...$d_7$ selon les relations suivantes :

$d_j = c_j + c_{7-j}$ pour $0 \leqq j \leqq 3$
$d_j = c_j - c_{7-j}$ pour $4 \leqq j \leqq 7$

Les quatre premières valeurs $d_0$, $d_1$, $d_2$, $d_3$ donnent les composantes d'indice pair $X_0$, $X_8$, $X_4$ et $X_{12}$ de la transformée en cosinus.

La première multiplication est définie par :

$e_0 = d_0$
$e_1 = d_1$
$e_2 = d_2$
$e_3 = d_3$
$e_4 = d_4$
$e_5 = -c_{\frac{\pi}{4}}.d_5 + c_{\frac{\pi}{4}}.d_6$
$e_6 = c_{\frac{\pi}{4}}.d_5 + c_{\frac{\pi}{4}}.d_6$
$e_7 = d_7$

Notons que la première multiplication appliquée aux composantes $d_0$, $d_1$, $d_2$ et $d_3$ est en fait l'opération d'identité. Cette opération permet de reporter la deuxième addition effectuée sur ces composantes en même temps que la deuxième addition effectuée sur les quatre composantes $e_4$, $e_5$, $e_6$ et $e_7$. Chaque étage de calcul reçoit ainsi simultanément toutes les composantes d'une suite, ce qui permet un traitement de type "pipe-line".

La deuxième addition est définie par :

$f_0 = e_0 + e_3$
$f_1 = e_1 + e_2$
$f_2 = e_1 - e_2$
$f_3 = e_0 - e_3$
$f_4 = e_4 + e_5$
$f_5 = e_4 - e_5$
$f_6 = -e_6 + e_7$
$f_7 = e_6 + e_7$

Enfin, la troisième multiplication est définie par :

$X_0 = c_{\frac{\pi}{4}}.f_0 + c_{\frac{\pi}{4}}.f_1$
$X_8 = c_{\frac{\pi}{4}}.f_0 - c_{\frac{\pi}{4}}.f_1$
$X_4 = s_{\frac{\pi}{8}}.f_2 + c_{\frac{\pi}{8}}.f_3$

$X_{12} = -c_{\frac{\pi}{8}} . f_2 + s_{\frac{\pi}{8}} . f_3$
$X_2 = s_{\frac{\pi}{16}} . f_4 + c_{\frac{\pi}{16}} . f_7$
$X_{10} = s_{\frac{5\pi}{16}} . f_5 + c_{\frac{5\pi}{16}} . f_6$
$X_6 = -c_{\frac{5\pi}{16}} . f_5 + s_{\frac{5\pi}{16}} . f_6$
$X_{14} = -c_{\frac{\pi}{16}} . f_4 + s_{\frac{\pi}{16}} . f_7$

L'opération 26 transforme la suite ($c_j$), $8 \leqq j \leqq 15$, en composantes d'indice impair de la transformée en cosinus. Cette opération 26 est constituée, conformément à l'invention, des quatre opérations successives suivantes : une addition, une multiplication, une addition, une multiplication.

Le treillis détaillé correspondant à cette opération 26 est représenté sur la figure 4c.

Ces opérations sont définies par les équations suivantes :

- première addition (tableau I),
- première multiplication (tableau II),
- deuxième addition (tableau III),
- deuxième multiplication (tableau IV),

Dans ce treillis, les éléments $e_i$, où $8 \leqq i \leqq 15$, représentent les différentes valeurs de cosTFD, sinTFD, TCD et TSD apparaissant dans la figure 3b. Les composantes $f_i$, où $8 \leqq i \leqq 15$, délivrées par le second étage d'addition représentent cosTFD + TCD et sinTFD + TSD, c'est-à-dire les quantités délivrées par l'opération 18 de la figure 3b.

Le treillis selon l'invention représenté sur les figures 4a, 4b et 4c apporte un gain d'un étage de multiplication par rapport au treillis selon l'art antérieur. Un gain identique est obtenu dans le cas N = 32. Le treillis correspondant comporte en effet seulement sept étages dont trois étages de multiplication.

On a représenté sur la figure 5a le treillis correspondant au procédé de calcul rapide de la transformée en cosinus selon l'invention dans le cas N = 32. Ce treillis est représenté sous la forme d'un bloc de trois opérations référencées respectivement 28, 30 et 32. L'opération 28 est l'addition initiale commune à tous les treillis, elle transforme la suite ($x_i$), $0 \leqq i \leqq 31$, en une suite ($a_i$),$0 \leqq i \leqq 31$, définie par $a_j = x_j + x_{31-j}$ et $a_{16+j} = x_j - x_{31-j}$, pour $0 \leqq j \leqq 15$.

L'opération 30 représente le treillis suivant l'invention pour N = 16. Il transforme les 16 premières composantes $a_0$, $a_1$, ..., $a_{15}$ en composantes d'indice pair de la transformée en cosinus de la suite ($x_i$), $0 \leqq i \leqq 31$, dans l'ordre suivant : $X_0$, $X_{16}$, $X_6$, $X_{24}$, $X_4$, $X_{20}$, $X_{12}$, $X_{28}$, $X_{30}$, $X_6$, $X_{18}$, $X_{10}$, $X_{22}$, $X_{14}$, $X_{26}$ et $X_2$.

L'opération 30 est représentée par le treillis de la figure 5b. Elle est fonctionnellement identique au treillis représenté sur les figures 4a, 4b et 4c et correspondant à N = 16. Il en diffère légèrement dans sa réalisation par l'adjonction entre les deux premières étapes additives d'une étape multiplicative égale à l'opération identité. Cette étape supplémentaire permet de synchroniser les additions et les multiplications réalisées par les opérations 30 et 32, ce qui rend possible un traitement de type "pipe-line".

On va maintenant décrire, en référence à la figure 5c, le treillis correspondant à l'opération 32. Celle-ci transforme les 16 dernières composantes $a_{16}$, $a_{17}$, ..., $a_{31}$ en composantes d'indice impair de la transformée en cosinus de la suite ($x_i$), $0 \leqq i \leqq 31$. Elle est constituée d'une suite d'étapes comprenant successivement une première addition, une deuxième addition, une première multiplication, une deuxième multiplication, une troisième addition et une troisième multiplication. Ces opérations sont définies par les relations suivantes :

- première addition (tableau V),
- deuxième addition (tableau VI),
- première multiplication (tableau VII),
- deuxième multiplication (tableau VIII),
- troisième addition (tableau IX),
- troisième multiplication (tableau X).

Les calculs correspondant aux treillis représentés sur les figures 3a à 5c sont réalisés par des circuits comportant en série des étages d'addition et des étages de multiplication. A titre d'exemple, on va décrire le schéma de principe d'un circuit correspondant à N = 16. Ce circuit est représenté sur la figure 6.

Ce circuit comprend en série 5 étages de calculs référencés 114, 116, 118, 120 et 122. Ces circuits comprennent chacun 16 entrées et 16 sorties. Les étages 114, 116 et 120 sont des étages d'addition de la forme $a \pm b$ et les étages 118 et 122 sont des étages de multiplication de la forme $\alpha a \pm \beta b$. Le calcul effectué par l'étage de rang k, où k est compris entre 1 et 5, correspond à l'étape de rang k du treillis représenté sur les figures 4a, 4b et 4c.

On décrira en référence aux figures 7 et 8 des modes de réalisation particulier d'un étage d'addition et en référence aux figures 9 et 10 des modes de réalisation particuliers d'un étage de multiplication.

Le circuit représenté sur la figure 6 comprend en outre des mémoires doubles 124, 126, 128 et 130

disposées chacune en série entre deux étages successifs. Dans le cas représenté sur la figure, chaque mémoire double comporte deux séries de 16 cellules de mémorisation. Plus généralement, la taille de chaque série est égale à N. Chaque série de N cellules d'une mémoire double peut recevoir les N valeurs délivrées par l'étage qui la précède.

Les deux séries d'une même mémoire fonctionnent en bascule. A un instant donné, une série reçoit les N valeurs délivrées par l'étage précédent alors que l'autre série délivre les N valeurs mémorisées à l'étage suivant. A l'instant suivant, le rôle de chaque série est inversé ; la série réceptrice devient émettrice et la série émettrice, réceptrice.

Ces mémoires doubles sont utilisées pour synchroniser les flux de données entre les différents étages de calculs et permettre ainsi un traitement de type pipe-line. Dans le cas d'un traitement séquentiel sans pipe-line, ces mémoires doubles peuvent être supprimées.

En général, chaque étage d'addition comporte un seul additionneur et un seul soustracteur, et de même, chaque étage multiplicatif comporte deux multiplieurs, un additionneur et un soustracteur. Le traitement des N valeurs reçues par l'étage se fait dans ce cas de manière séquentielle. Il est alors nécessaire d'adjoindre entre chaque étage de calcul une mémoire double. De plus, une mémoire tampon 132 peut être disposée en entrée de l'étage d'addition 114.

On va maintenant décrire des modes de réalisation d'un étage d'addition et d'un étage de multiplication en référence aux figures 7 à 10.

La figure 7 représente un premier mode de réalisation d'un étage d'addition. Il comprend essentiellement deux tampons d'entrée 134, 136 pour mémoriser des nombres a et b, un additionneur 138, un soustracteur 140 et deux tampons de sortie 142, 144. L'additionneur 138 comporte une entrée de commande 139 qui commande soit l'addition des deux nombres contenus dans les tampons d'entrée, soit la transmission de l'un de ces nombres. Le soustracteur 140 comprend de même une entrée 141 ayant un rôle semblable. Le tampon de sortie 142 peut ainsi recevoir a+b, a ou b ; le tampon de sortie 144 a-b, a ou -b.

La figure 8 illustre une variante de réalisation de l'étage d'addition. Le soustracteur et l'additionneur sont remplacés par un additionneur-soustracteur 148 ayant deux entrées de commande 147, 149 pour définir le nombre délivré au tampon de sortie 146 qui peut être égal à a, -b, a+b ou a-b.

Les étages d'addition représentés sur les figures 7 et 8 comprennent également un séquenceur et un moyen d'adressage (non représentés), ce dernier étant utilisé pour charger les tampons d'entrée avec des nombres contenus dans la mémoire précédant cet étage et pour stocker dans la mémoire suivante le contenu d'un tampon de sortie.

La figure 9 représente un premier mode de réalisation d'un étage de multiplication. Il comprend quatre tampons d'entrée 150, 152, 154 et 156 contenant respectivement les nombres $\alpha$, $\beta$, a et b, deux multiplieurs 158 et 160 pour délivrer les produits $\alpha$a et $\beta$b, un additionneur-soustracteur 162 ayant deux entrées de commande 161, 163 et un tampon de sortie 164 recevant, selon les signaux appliqués sur les entrées de commande 161 et 163, $\alpha$a, $\beta$b, $\alpha$a+$\beta$b ou $\alpha$a-$\beta$b.

Les tampons d'entrée 154 et 156 reçoivent des nombres de la mémoire précédant l'étage multiplicatif. Les tampons d'entrée 150 et 152 sont chargés avec des nombres contenus dans une mémoire morte 149 associée à cet étage. Celui-ci comprend également un séquenceur et un moyen d'adressage (non représentés).

Les tampons d'entrée 150 et 152 peuvent recevoir respectivement les coefficients $\alpha$ et $\beta$, mais aussi les coefficients $\beta$ et $\alpha$. Dans ce cas, le tampon 164 peut recevoir les nombres $\alpha$b, $\beta$a, $\beta$a-$\alpha$b, $\beta$a+$\alpha$b. S'il n'est pas possible d'orienter chaque coefficient $\alpha$ et $\beta$ indifféremment vers les tampons d'entrée 150 et 152, il faut prévoir deux circuits comme celui de la figure 9, l'un dans lequel les tampons d'entrée 150 et 152 reçoivent respectivement $\alpha$ et $\beta$ et l'autre dans lequel ils reçoivent respectivement $\beta$ et $\alpha$.

Une première variante de réalisation du circuit de la figure 9 consiste à remplacer l'additionneur-soustracteur 162 par un additionneur et un soustracteur distinct. Dans ce cas, quatre multiplieurs sont nécessaires, deux étant associés à l'additionneur et deux au soustracteur.

Une seconde variante de réalisation est représentée sur la figure 10. Ce circuit est intéressant dans le cas où une vitesse de traitement moins importante est acceptée. Dans cette figure, les éléments identiques à ceux de la figure 9 portent les mêmes références. Dans cet étage, on a supprimé les tampons d'entrée 152 et 156, et le multiplieur 160. Une mémoire 166 de type accumulateur à une entrée et deux sorties, est disposée entre le multiplieur 158 et l'additionneur-soustracteur 162. La mémoire 166 et l'additionneur-soustracteur 162 peuvent être remplacés par un additionneur-soustracteur ayant une entrée de type accumulateur. L'avantage de ce mode de réalisation est de ne nécessiter qu'un seul multiplieur, ce qui est très avantageux du point de vue économique.

On a indiqué en référence aux figures 3a à 5c des treillis correspondant au calcul de la transformée en

cosinus selon l'invention. Le traitement en cosinus effectué sur un signal a souvent pour but de réaliser un traitement de ce signal dans le domaine fréquentiel. Celui-ci est généralement suivi de la transformée en cosinus inverse de ce signal traité. Le treillis correspondant à la transformée inverse en cosinus s'obtient très facilement à partir du treillis de la transformée directe. Il suffit en effet de remplacer les opérations de calcul par leurs transposées et de renverser l'ordre de ces opérations, comme on l'a indiqué en référence aux figures 3a et 3b.

On trouvera à titre d'exemple sur la figure 11 le treillis correspondant à la transformée inverse en cosinus pour le cas $N=16$. Ce treillis correspond exactement au treillis de la figure 4a lu de droite à gauche avec les mêmes coefficients.

On a représenté sur la figure 12 le schéma de principe du circuit associé à cette transformation inverse. Les étages de calcul sont identiques à ceux du circuit de la figure 6, mais leur ordre est inversé. Entre ces étages de calcul sont insérées des mémoires doubles 166, 168, 170 et 172 dont le rôle est identique aux mémoires 124, 126, 128 et 130 du circuit de la figure 7. Par ailleurs, la mémoire 174 située en entrée du circuit de la figure 12 joue un rôle identique à celui de la mémoire 132 du circuit de la figure 6.

TABLEAU I

$$d_8 = c_8$$
$$d_9 = c_9 + c_{10}$$
$$d_{10} = c_9 - c_{10}$$
$$d_{11} = c_{11} + c_{12}$$
$$d_{12} = c_{11} - c_{12}$$
$$d_{13} = c_{13} + c_{14}$$
$$d_{14} = c_{13} - c_{14}$$
$$d_{15} = c_{15}$$

TABLEAU II

$$e_8 = -d_8 + c\frac{\pi}{4} \cdot d_{12}$$
$$e_9 = -c\frac{\pi}{8} \cdot d_9 + s\frac{\pi}{8} \cdot d_{13}$$
$$e_{10} = c\frac{\pi}{8} \cdot d_{10} + s\frac{\pi}{8} \cdot d_{14}$$
$$e_{11} = -c\frac{\pi}{4} \cdot d_{11} + d_{15}$$
$$e_{12} = d_8 + c\frac{\pi}{4} \cdot d_{12}$$
$$e_{13} = s\frac{\pi}{8} \cdot d_9 + c\frac{\pi}{8} \cdot d_{13}$$
$$e_{14} = -s\frac{\pi}{8} \cdot d_{10} + c\frac{\pi}{8} \cdot d_{14}$$
$$e_{15} = c\frac{\pi}{4} \cdot d_{11} + d_{15}$$

TABLEAU III

$$f_8 = e_8 + e_{10}$$
$$f_9 = e_9 + e_{11}$$
$$f_{10} = -e_8 + e_{10}$$
$$f_{11} = -e_9 + e_{11}$$
$$f_{12} = -e_{12} + e_{14}$$
$$f_{13} = -e_{13} + e_{15}$$
$$f_{14} = e_{12} + e_{14}$$
$$f_{15} = e_{13} + e_{15}$$

TABLEAU IV

$$X_{15} = c\frac{\pi}{32}.f_8 + s\frac{\pi}{32}.f_{15}$$
$$X_3 = c\frac{3\pi}{32}.f_9 - s\frac{3\pi}{32}.f_{14}$$
$$X_9 = c\frac{7\pi}{32}.f_{10} + s\frac{7\pi}{32}.f_{13}$$
$$X_5 = c\frac{5\pi}{32}.f_{11} - s\frac{5\pi}{32}.f_{12}$$
$$X_{11} = s\frac{5\pi}{32}.f_{11} + c\frac{5\pi}{32}.f_{12}$$
$$X_7 = -s\frac{7\pi}{32}.f_{10} + c\frac{7\pi}{32}.f_{13}$$
$$X_{13} = s\frac{3\pi}{32}.f_9 + c\frac{3\pi}{32}.f_{14}$$
$$X_1 = -s\frac{\pi}{32}.f_8 + c\frac{\pi}{32}.f_{15}$$

TABLEAU V

$$b_{16} = a_{16}$$
$$b_{17} = a_{17} + a_{18}$$
$$b_{18} = a_{17} - a_{18}$$
$$b_{19} = a_{19} + a_{20}$$
$$b_{20} = a_{19} - a_{20}$$
$$b_{21} = a_{21} + a_{22}$$
$$b_{22} = a_{21} - a_{22}$$
$$b_{23} = a_{23} + a_{24}$$
$$b_{24} = a_{23} - a_{24}$$
$$b_{25} = a_{25} + a_{26}$$
$$b_{26} = a_{25} - a_{26}$$
$$b_{27} = a_{27} + a_{28}$$
$$b_{28} = a_{27} - a_{28}$$
$$b_{29} = a_{29} + a_{30}$$
$$b_{30} = a_{29} - a_{30}$$
$$b_{31} = a_{31}$$

TABLEAU VI

$c_{16} = b_{16}$
$c_{17} = b_{17}$
$c_{18} = b_{18}$
$c_{19} = b_{19}$
$c_{20} = b_{20}$
$c_{21} = b_{21} + b_{25}$
$c_{22} = b_{22} - b_{26}$
$c_{23} = b_{23}$
$c_{24} = b_{24}$
$c_{25} = -b_{25} + b_{21}$
$c_{26} = b_{22} + b_{26}$
$c_{27} = b_{27}$
$c_{28} = b_{28}$
$c_{29} = b_{29}$
$c_{30} = b_{30}$
$c_{31} = b_{31}$

TABLEAU VII

$$d_{16} = c_{16} + c_{\frac{\pi}{4}} \cdot c_{24}$$
$$d_{17} = -c_{17} + c_{\frac{\pi}{4}} \cdot c_{25}$$
$$d_{18} = -c_{18} + c_{\frac{\pi}{4}} \cdot c_{26}$$
$$d_{19} = s_{\frac{\pi}{8}} \cdot c_{19} + c_{\frac{\pi}{8}} \cdot c_{27}$$
$$d_{20} = -s_{\frac{\pi}{8}} \cdot c_{20} + c_{\frac{\pi}{8}} \cdot c_{28}$$
$$d_{21} = c_{\frac{\pi}{4}} \cdot c_{21} + c_{29}$$
$$d_{22} = -c_{\frac{\pi}{4}} \cdot c_{22} + c_{30}$$
$$d_{23} = c_{\frac{\pi}{4}} \cdot c_{23} + c_{31}$$
$$d_{24} = -c_{16} + c_{\frac{\pi}{4}} \cdot c_{24}$$
$$d_{25} = c_{17} + c_{\frac{\pi}{4}} \cdot c_{25}$$
$$d_{26} = c_{18} + c_{\frac{\pi}{4}} \cdot c_{26}$$
$$d_{27} = -c_{\frac{\pi}{8}} \cdot c_{19} + s_{\frac{\pi}{8}} \cdot c_{27}$$
$$d_{28} = c_{\frac{\pi}{8}} \cdot c_{20} + s_{\frac{\pi}{8}} \cdot c_{28}$$
$$d_{29} = -c_{\frac{\pi}{4}} \cdot c_{21} + c_{29}$$
$$d_{30} = c_{\frac{\pi}{4}} \cdot c_{22} + c_{30}$$
$$d_{31} = -c_{\frac{\pi}{4}} \cdot c_{23} + c_{31}$$

TABLEAU VIII

$$e_{16} = d_{16} + d_{20}$$
$$e_{17} = c\frac{\pi}{16}\cdot d_{17} + s\frac{\pi}{16}\cdot d_{21}$$
$$e_{18} = -s\frac{3\pi}{16}\cdot d_{18} + c\frac{3\pi}{16}\cdot d_{22}$$
$$e_{19} = d_{19} + d_{23}$$
$$e_{20} = -d_{16} + d_{20}$$
$$e_{21} = -s\frac{\pi}{16}\cdot d_{17} + c\frac{\pi}{16}\cdot d_{21}$$
$$e_{22} = c\frac{3\pi}{16}\cdot d_{18} + s\frac{3\pi}{16}\cdot d_{22}$$
$$e_{23} = -d_{19} + d_{23}$$
$$e_{24} = -d_{24} + d_{28}$$
$$e_{25} = -s\frac{3\pi}{16}\cdot d_{25} + c\frac{3\pi}{16}\cdot d_{29}$$
$$e_{26} = c\frac{\pi}{16}\cdot d_{26} + s\frac{\pi}{16}\cdot d_{30}$$
$$e_{27} = -d_{27} + d_{31}$$
$$e_{28} = d_{24} + d_{28}$$
$$e_{29} = c\frac{3\pi}{16}\cdot d_{25} + s\frac{3\pi}{16}\cdot d_{29}$$
$$e_{30} = -s\frac{\pi}{16}\cdot d_{26} + c\frac{\pi}{16}\cdot d_{30}$$
$$e_{31} = d_{27} + d_{31}$$

TABLEAU IX

$$f_{16} = e_{16} + e_{22}$$
$$f_{17} = e_{17} + e_{23}$$
$$f_{18} = e_{18} - e_{20}$$
$$f_{19} = e_{19} - e_{21}$$
$$f_{20} = e_{18} + e_{20}$$
$$f_{21} = e_{19} + e_{21}$$
$$f_{22} = -e_{16} + e_{22}$$
$$f_{23} = -e_{17} + e_{23}$$
$$f_{24} = -e_{24} + e_{30}$$
$$f_{25} = -e_{25} + e_{31}$$
$$f_{26} = e_{26} + e_{28}$$
$$f_{27} = e_{27} + e_{29}$$
$$f_{28} = e_{26} - e_{28}$$
$$f_{29} = e_{27} - e_{29}$$
$$f_{30} = e_{24} + e_{30}$$
$$f_{31} = e_{25} + e_{31}$$

TABLEAU X

$$X_{29} = c\frac{3\pi}{64}\cdot f_{16} + s\frac{3\pi}{64}\cdot f_{31}$$
$$X_{7} = c\frac{7\pi}{64}\cdot f_{17} - s\frac{7\pi}{64}\cdot f_{30}$$
$$X_{21} = c\frac{11\pi}{64}\cdot f_{18} + s\frac{11\pi}{64}\cdot f_{29}$$
$$X_{15} = c\frac{15\pi}{64}\cdot f_{19} - s\frac{15\pi}{64}\cdot f_{28}$$
$$X_{27} = c\frac{5\pi}{64}\cdot f_{20} + s\frac{5\pi}{64}\cdot f_{27}$$
$$X_{1} = c\frac{\pi}{64}\cdot f_{21} - s\frac{\pi}{64}\cdot f_{26}$$
$$X_{19} = c\frac{13\pi}{64}\cdot f_{22} + s\frac{13\pi}{64}\cdot f_{25}$$
$$X_{9} = c\frac{9\pi}{64}\cdot f_{23} - s\frac{9\pi}{64}\cdot f_{24}$$
$$X_{23} = c\frac{9\pi}{64}\cdot f_{24} + s\frac{9\pi}{64}\cdot f_{23}$$
$$X_{13} = c\frac{13\pi}{64}\cdot f_{25} - s\frac{13\pi}{64}\cdot f_{22}$$
$$X_{31} = c\frac{\pi}{64}\cdot f_{26} + s\frac{\pi}{64}\cdot f_{21}$$
$$X_{5} = c\frac{5\pi}{64}\cdot f_{27} - s\frac{5\pi}{64}\cdot f_{20}$$
$$X_{17} = c\frac{15\pi}{64}\cdot f_{28} + s\frac{15\pi}{64}\cdot f_{19}$$
$$X_{11} = c\frac{11\pi}{64}\cdot f_{29} - s\frac{11\pi}{64}\cdot f_{18}$$
$$X_{25} = c\frac{7\pi}{64}\cdot f_{30} + s\frac{7\pi}{64}\cdot f_{17}$$
$$X_{3} = c\frac{3\pi}{64}\cdot f_{31} - s\frac{3\pi}{64}\cdot f_{16}$$

## Revendications

**1.** Circuit de calcul rapide de la transformée en cosinus $(X_i)$, $0 \leq i \leq N-1$, où $N = 2^n$, $n \geq 4$, d'un signal discrétisé défini par une suite $(x_i)$, $0 \leq i \leq N-1$, caractérisé en ce qu'il met en oeuvre des graphes standards (figures 3a, 4a, 5a) et en ce qu'il comprend pour cela:

- un premier étage d'addition recevant la suite $(x_j)$, $0 \leq j \leq N-1$, et délivrant une première suite $(x_j^0)$, $0 \leq j \leq \frac{N}{2}-1$, où

$$x_j^0 = x_j + x_{N-1-j},$$

  et une seconde suite $(y_j)$, $0 \leq j \leq \frac{N}{2}-1$, où $y_j = x_j - x_{N-1-j}$;
- un ensemble de demi-étages supérieurs reliés en série, le premier demi-étage supérieur recevant la première suite $(x_j^0)$, $0 \leq j \leq \frac{N}{2}-1$, et le dernier demi-étage supérieur délivrant la suite $(X_{2q})$, $0 \leq q \leq \frac{N}{2}-1$, des composantes d'indice pair de la transformée en cosinus, le signal délivré sur chaque sortie de chaque demi-étage étant obtenu par combinaison linéaire d'au plus deux signaux appliqués sur chacune de ses entrées, ledit ensemble de demi-étages supérieurs étant défini par récurrence sur la taille N,ledit ensemble de demi-étages supérieurs constituant un circuit de transformée en cosinus pour N/2 points, ledit circuit comprenant en série, pour N = 8, un étage

d'addition, un étage de multiplication, un étage d'addition et un étage de multiplication ;

- un ensemble de demi-étages inférieurs reliés en série, le premier demi-étage inférieur recevant la seconde suite $(y_j)$, $0 \leq j \leq \frac{N}{2}-1$, et le dernier demi-étage inférieur délivrant la suite $(X_{2q+1})$, $0 \leq q \leq \frac{N}{2}-1$, des composantes d'indice impair de la transformée en cosinus, le signal délivré sur chaque sortie de chaque demi-étage étant obtenu par combinaison linéaire d'au plus deux signaux appliqués sur chacune de ses entrées, l'ensemble de demi-étages inférieurs comprenant en série :
a) un premier demi-étage inférieur d'addition délivrant une troisième suite $(x_j^3)$, $0 \leq j \leq \frac{N}{8}-1$, où

$$x_j^3 = y_{4j+2} + y_{4j+1},$$

une quatrième suite $(x_j^1)$, $0 \leq j \leq \frac{N}{4}-1$, où

$$x_j^1 = y_{4j}$$

pour $j \leq \frac{N}{8}-1$ et

$$x_j^1 = -y_{N-4j-1}$$

pour $j > \frac{N}{8}-1$, et une cinquième suite $(x_j^2)$, $0 \leq j \leq \frac{N}{8}-1$ où

$$x_j^2 = y_{4j+2} - y_{4j+1},$$

b) une suite de demi-étages inférieurs d'addition ou de multiplication délivrant une sixième suite $(\alpha_{2q+1})$, $0 \leq q \leq \frac{N}{8}-1$, égale aux parties réelles des composantes d'indice impair de la transformée de Fourier d'ordre $\frac{N}{2}$ de la quatrième suite, une septième suite $(\beta_{2q+1})$, $0 \leq q \leq \frac{N}{8}-1$ égale aux parties imaginaires des composantes d'indice impair de la transformée de Fourier d'ordre $\frac{N}{2}$ de la quatrième suite, une huitième suite $(\delta_{2q+1})$, $0 \leq q \leq \frac{N}{8}-1$ égale aux composantes d'indice impair de la transformée en sinus d'ordre $\frac{N}{4}$ de la cinquième suite, une neuvième suite $(\gamma_{2q+1})$, $0 \leq q \leq \frac{N}{8}-1$ égale aux composantes d'indice impair de la transformée en cosinus d'ordre $\frac{N}{4}$ de la troisième suite,
c) un deuxième demi-étage inférieur d'addition pour délivrer les suites $(\alpha_{2q+1} + \gamma_{2q+1})$, $0 \leq q \leq \frac{N}{8}-1$, $(\alpha_{2q+1} - \gamma_{2q+1})$, $0 \leq q \leq \frac{N}{8}-1$, $(\beta_{2q+1} + \delta_{2q+1})$, $0 \leq q \leq \frac{N}{8}-1$, et $(\beta_{2q+1} - \delta_{2q+1})$, $0 \leq q \leq \frac{N}{8}-1$,
d) un demi-étage inférieur de multiplication délivrant la suite $(X_{2q+1})$, $0 \leq q \leq \frac{N}{2}-1$, des composantes d'indice impair de la transformée en cosinus d'ordre N de la suite $(x_j)$, $0 \leq j \leq N-1$.

**2.** Circuit selon la revendication 1, caractérisé en ce que les ensembles de demi-étages supérieurs et de demi-étages inférieurs comprennent un nombre identique de demi-étages d'addition.

**3.** Circuit selon l'une quelconque des revendications 1 et 2, caractérisé en ce que l'ensemble de demi-étages supérieurs et l'ensemble de demi-étages inférieurs comprennent un nombre identique de demi-étages de multiplication , certains demi-étages de multiplication étant éventuellement égaux à l'opération identité.

**4.** Circuit seton l'une quelconque des revendications 2 et 3, caractérisé en ce qu'un demi-étage supérieur de rang déterminé et le demi-étage inférieur de même rang sont du même type, c'est-à-dire tous tes deux des étages d'addition ou tous tes deux des étages de multiplication.

**5.** Circuit selon l'une quelconque des revendications 1 à 4, caractérisé en ce que la suite de demi-étages inférieurs, délivrant la sixième suite égale aux parties réelles des composantes d'indice impair de la transformée de Fourier d'ordre $\frac{N}{2}$ de la quatrième suite, est composée d'étages d'addition et de multiplication dont le nombre, l'ordre et le type sont ceux d'un circuit de transformée en cosinus pour

une suite de $\frac{N}{4}$ points, ledit circuit comprenant pour N = 4, un étage d'addition et un étage de multiplication.

6. Circuit selon l'une quelconque des revendications 1 à 5, caractérisé en ce que chaque ensemble de demi-étages comprend n-2 demi-étages d'addition et

$$E\left(\frac{n+1}{2}\right)$$

demi-étages de multiplication, où E est la fonction partie entière, certains demi-étages de multiplication étant éventuellement égaux à l'opération identité.

7. Circuit selon l'une quelconque des revendications 1 à 6, caractérisé en ce qu'il comprend une mémoire d'au moins N cellules de mémorisation entre le premier étage d'addition et les ensembles de demi-étages supérieur et inférieur et une mémoire d'au moins $\frac{N}{2}$ cellules de mémorisation entre chaque demi-étage.

8. Circuit selon l'une quelconque des revendications 1 à 6, caractérisé en ce qu'il comprend une mémoire double comportant deux séries d'au moins N cellules de mémorisation entre le premier étage d'addition et les ensembles de demi-étages supérieur et inférieur et une mémoire double comportant deux séries d'au moins $\frac{N}{2}$ cellules de mémorisation entre chaque demi-étage.

9. Circuit selon l'une quelconque des revendications 7 et 8, caractérisé en ce qu'il comprend en outre une mémoire d'au moins N cellules de mémorisation devant le premier étage.

10. Circuit de calcul rapide de la transformée inverse en cosinus $(x_i)$, $0 \leqq i \leqq N-1$, la transformée directe en cosinus étant définie dans les revendications 1 à 9, d'un signal discrétisé défini par une suite $(X_i)$, $0 \leqq i \leqq N-1$, où $N = 2^n$ et n est un nombre supérieur ou égal à 4, ledit circuit étant caractérisé en ce qu'il met inversement en oeuvre des graphes standards (figures 3a, 4a, 5a) et en ce qu'il comprend pour cela:
   - un ensemble de demi-étages supérieurs recevant la suite $(X_{2q})$, $0 \leqq q \leqq \frac{N}{2}$ -1 des composantes d'indice pair de la transformée en cosinus et délivrant la première suite $(x_j^0)$, $0 \leqq j \leqq \frac{N}{2}$ -1, ledit ensemble de demi-étages supérieurs étant défini par récurrence sur la taille N, ledit ensemble de demi-étages supérieurs constituant un circuit de transformée inverse en cosinus pour N/2 points,
   - un ensemble de demi-étages inférieurs recevant la suite $(X_{2q+1})$, $0 \leqq q \leqq \frac{N}{2}$ -1 des composantes d'indice impair de la transformée en cosinus et délivrant la seconde suite $(x_j^1)$, $0 \leqq j \leqq \frac{N}{2}$ -1, l'ensemble de demi-étages inférieurs comprenant en série :

     a) un demi-étage inférieur de multiplication recevant la suite $(X_{2q+1})$, $0 \leqq q \leqq \frac{N}{2}$ -1, des composantes d'indice impair de la transformée en cosinus d'ordre N de la suite $(x_j)$, $0 \leqq j \leqq N-1$.

     b) un premier demi-étage inférieur d'addition recevant les suites $(\alpha_{2q+1} + \gamma_{2q+1})$, $0 \leqq q \leqq \frac{N}{8}$ -1, $(\alpha_{2q+1} - \gamma_{2q+1})$, $0 \leqq q \leqq \frac{N}{8}$ -1, $(\beta_{2q+1} + \delta_{2q+1})$, $0 \leqq q \leqq \frac{N}{8}$ -1, et $(\beta_{2q+1} - \delta_{2q+1})$, $0 \leqq q \leqq \frac{N}{8}$ -1,

     c) une suite de demi-étages inférieurs d'addition ou de multiplication recevant la sixième suite $(\alpha_{2q+1})$, $0 \leqq q \leqq \frac{N}{8}$ -1, égale aux parties réelles des composantes d'indice impair de la transformée de Fourier d'ordre $\frac{N}{2}$ de la quatrième suite, la septième suite $(\beta_{2q+1})$, $0 \leqq q \leqq \frac{N}{8}$ -1 égale aux parties imaginaires des composantes d'indice impair de la transformée de Fourier d'ordre $\frac{N}{2}$ de la quatrième suite, la huitième suite $(\delta_{2q+1})$, $0 \leqq q \leqq \frac{N}{8}$ -1 égale aux composantes d'indice impair de la transformée en sinus d'ordre $\frac{N}{4}$ de la cinquième suite, la neuvième suite $(\gamma_{2q+1})$, $0 \leqq q \leqq \frac{N}{8}$ -1 égale aux composantes d'indice impair de la transformée en cosinus d'ordre $\frac{N}{4}$ de la troisième suite,

     d) un deuxième demi-étage inférieur d'addition recevant la troisième suite $(x_j^3)$, $0 \leqq j \leqq \frac{N}{8}$ -1, où

$$x_j^3 = y_{4j+2} + y_{4j+1},$$

     la quatrième suite $(x_j^1)$, $0 \leqq j \leqq \frac{N}{4}$ -1, où

$$x_J^1 = y_{4j}$$

pour $j \leq \frac{N}{8} - 1$ et

$$x_J^1 = -y_{N-4j-1}$$

pour $j > \frac{N}{8} - 1$, et la cinquième suite ($x_j^2$), $0 \leq j \leq \frac{N}{8} - 1$ où

$$x_j^2 = y_{4j+2} - y_{4j+1},$$

et

- un étage final d'addition recevant la première suite ($x_j^0$) et la seconde suite ($y_j$) et délivrant la suite ($x_j$), $0 \leq j \leq N-1$, où

$$x_j^0 = x_j + x_{N-1-j},$$

et $y_j = x_j - x_{N-1-j}$

**11.** Circuit selon la revendication 10, caractérisé en ce qu'il comprend une mémoire d'au moins N cellules de mémorisation entre le premier étage d'addition et les ensembles de demi-étages supérieur et inférieur et une mémoire d'au moins $\frac{N}{2}$ cellules de mémorisation encre chaque demi-étage.

**12.** Circuit selon la revendication 10, caractérisé en ce qu'il comprend une mémoire double comportant deux séries d'au moins N cellules de mémorisation entre le premier étage d'addition et les ensembles de demi-étages supérieur et inférieur et une mémoire double comportant deux séries d'au moins $\frac{N}{2}$ cellules de mémorisation entre chaque demi-étage.

**13.** Circuit selon l'une quelconque des revendications 11 et 12, caractérisé en ce qu'il comprend en outre une mémoire d'au moins N cellules de mémorisation devant le premier étage.

**Claims**

**1.** Circuit for the fast calculation of the cosine transform ($X_i$), $0 \leq i \leq N-1$, in which $N = 2^n$, $n \geq 4$ of a discretized signal defined by a sequence ($x_i$), $0 \leq i \leq N-1$, characterized in that it uses standard graphs (figs. 3a,4a,5a) and in that it comprises for this purpose:
a first adder stage receiving the sequence ($x_j$), $0 \leq j \leq N-1$, and supplying a first sequence ($x_j^0$), $0 \leq j \leq \frac{N}{2}^j - 1$, in which

$$x_j^o = x_j + x_{N-1-j},$$

and a second sequence ($y_j$), $0 \leq j \leq \frac{N}{2} - 1$, in which $y_j = x_j - x_{N-1-j}$;
a group of upper half-stages connected in series, the first upper half-stage receiving the first sequence ($x_i^0$), $0 \leq j \leq \frac{N}{2} - 1$, and the last upper half-stage supplying the sequence ($X_{2q}$), $0 \leq q \leq \frac{N}{2} - 1$, of the even index components of the cosine transform, the signal supplied on each output of each half-stage being obtained by linear combination of at the most two signals applied to each of its inputs, said group of upper half-stages being defined by recurrence on the size N, said group of upper half- stages constituting a cosine transform circuit for N/2 points, said circuit comprising in series, for N = 8, and adder stage, a multiplier stage, an adder stage and a multiplier stage;
a group of lower half-stages connected in series, the first lower half-stage receiving the second

sequence ($y_j$), $0 \leqq j \leqq \frac{N}{2} - 1$, and the final lower half-stage supplying the sequence ($X_{2q+1}$), $0 \leqq q \leqq \frac{N}{2} - 1$, of odd index components of the cosine transform, the signal supplied on each output of each half-stage being obtained by linear combination of at the most two signals applied to each of its inputs, the group of lower half-stages comprising in series:

a) a first lower adder half-stage supplying a third sequence ($x_j^3$), $0 \leqq j \leqq \frac{N}{8} - 1$, in which

$$x_j^3 = y_{4j+2} + Y_{4j+1},$$

a fourth sequence ($x_j^1$), $0 \leqq j \leqq \frac{N}{4} - 1$, in which

$$x_j^1 = y_{4j}$$

for $j \leqq \frac{N}{8} - 1$ and

$$x_j^1 = -y_{N-4j-1}$$

for $j \geqq \frac{N}{8} - 1$, and a fifth sequence ($x_j^2$), $0 \leqq j \leqq \frac{N}{8} - 1$ in which

$$x_j^2 = y_{4j+2} - y_{4j+1},$$

b) a sequence of lower adder or multiplier half-stages supplying a sixth sequence ($\alpha_{2q+1}$), $0 \leqq q \leqq \frac{N}{8} - 1$, equal to the real parts of the odd index components of the Fourier transform of order $\frac{N}{2}$ of the fourth sequence, a seventh sequence ($\beta_{2q+1}$), $0 \leqq q \leqq \frac{N}{8} - 1$ equal to the imaginary parts of the odd index comonents of the Fourier transform of order $\frac{N}{2}$ of the fourth sequence, an eighth sequence ($\delta_{2q+1}$), $0 \leqq q \leqq \frac{N}{8} - 1$ equal to the uneven index components of the sine transform of order $\frac{N}{4}$ of the fifth sequence, a ninth sequence ($\gamma_{2q+1}$),$0 \leqq q \leqq \frac{N}{8} - 1$) equal to the odd index components of the cosine transform of order $\frac{N}{4}$ of the third sequence,

c) a second lower adder half-stage for supplying the sequences ($\alpha_{2q+1} + \gamma_{2q+1}$), $0 \leqq q \leqq \frac{N}{8} - 1$, ($\alpha_{2q+1} - \gamma_{2q+1}$), $0 \leqq q \leqq \frac{N}{8} - 1$, ($\beta_{2q+1} + \delta_{2q+1}$, $0 \leqq q \leqq \frac{N}{8} - 1$, and ($\beta_{2q+1} - \delta_{q+1}$), $0 \leqq q \leqq \frac{N}{8} - 1$, d) and a lower multiplier half-stage supplying the sequence ($X_{2q+1}$), $0 \leqq q \leqq \frac{N}{2} - 1$, of odd index components of the cosine transform of order N of the sequence ($x_j$), $0 \leqq j \leqq N-1$.

**2.** Circuit according to claim 1, characterized in that the group of upper half-stages and lower half-stages comprise an identical number of adder half-stages.

**3.** Circuit according to either of the claims 1 and 2, characterized in that the group of upper half-stages and the group of lower half-stages comprise an identical number of multiplier half-stages, certain multiplier half-stages being optionally equal to the identity operation.

**4.** Circuit according to either of the claims 2 and 3, characterized in that an upper half-stage of given rank and a lower half-stage of the same rank are of the same type, i.e. both are adder stages or both are multiplier stages.

**5.** Circuit according to any one of the claims 1 to 4, characterized in that the sequence of lower half-stages supplying the sixth sequence equal to the real parts of the odd index components of the $\frac{N}{2}$ order Fourier transform of the fourth sequence consists of adder and multiplier stages, whose number, order and type are those of a cosine transform circuit for a sequence of $\frac{N}{4}$ points, said circuit having for $N=4$ an adder stage and multiplier stage.

**6.** Circuit according to any one of the claims 1 to 5, characterized in that each group of half-stages comprises n-2 adder half-stages and

$$E(\frac{n+1}{2})$$

multiplier half-stages, in which E is the integral part function, some multiplier half-stages being optionally equal to the identity operation.

**7.** Circuit according to any one of the claims 1 to 6, characterized in that it comprises a memory of at least N storage cells between the first adder stage and the groups of upper and lower half-stages and a memory of at least $\frac{N}{2}$ storage cells between each half stage.

**8.** Circuit according to any one of the claims 1 to 6, characterized in that it comprises a double memory having two series of at least N storage cells between the first adder stage and the groups of upper and lower half-stages and a double memory having two series of at least $\frac{N}{2}$ storage cells between each half-srage.

**9.** Circuit according to either of the claims 7 and 8, characterized in that it also comprises a memory of at least N storage cells in front of the first stage.

**10.** Circuit for the fast calculation of the inverse cosine transforms $(x_i)$, $0 \leqq i \leqq N-1$, the direct cosine transform being defined in claims 1 to 9, of a discretized signal defined by a sequence $(X_i)$, $0 \leqq i \leqq N-1$, in which $N = 2^n$ and n is a number equal to or greater than 4, said circuit being characterized in that it inversely uses standard graphs (figs. 3a,4a,5a) and in that it comprises for this purpose: a group of upper half-stages receiving the sequence $(X_{2q})$,$0 \leqq q \leqq \frac{N}{2}-1$ of even index components of the cosine transform and supplying a first sequence $(x_j^0)$, $0 \leqq j \leqq \frac{N}{2}-1$, said group of upper half-stages being defined by reccurence on the size N and constituting an inverse cosine transform circuit for N/2 points, a group of lower half-stages receiving the sequence $(X_{2q+1})$, $0 \leqq q \leqq \frac{N}{2}-1$ of the odd index components of the cosine transform and supplying a second sequence $(x_j^1)$, $o \leqq j \leqq \frac{N}{2}-1$, the group of lower half-stages comprising in series:

a) a lower multiplication half-stage receiving the sequence $(X_{2q+1})$, $0 \leqq q \leqq \frac{N}{2}-1$, of components of odd index of the cosine transform of the order N of the sequence $(x_j)$, $0 \leqq j \leqq N-1$,

b) a first lower addition half-stage receiving the sequences $(\alpha_{2q+1}+\gamma_{2q+1})$, $0 \leqq q \leqq \frac{N}{8}-1$, $(\alpha_{2q+1}-\gamma_{2q+1})$, $0 \leqq q \leqq \frac{N}{8}-1$, $(\beta_{2q+1}+\delta_{2q+1})$, $0 \leqq q \leqq \frac{N}{8}-1$, and $(\beta_{2q+1}-\delta_{2q+1})$, $0 \leqq q \leqq \frac{N}{8}-1$,

c) a sequence of lower addition or multiplication half-stages receiving the sixth sequence $(\alpha_{2q+1})$, $0 \leqq q \leqq \frac{N}{8}-1$, equal to the real parts of the odd index components of the Fourier transform of order $\frac{N}{2}$ of the fourth sequence, the seventh sequence $(\beta_{2q+1})$, $0 \leqq q \leqq \frac{N}{8}-1$ equal to the imaginary parts of the odd index components of the Fourier transform of order $\frac{N}{2}$ of the fourth sequence, the eighth sequence $(\delta_{2q+1})$, $0 \leqq q \leqq \frac{N}{8}-1$ equal to the odd index components of the sine transform of order $\frac{N}{4}$ of the fifth sequence, the ninth sequence $(\gamma_{2q+1})$ $0 \leqq q \leqq \frac{N}{8}-1$ equal to the odd index components of the cosine transform of order $\frac{N}{4}$ of the third sequence,

d) a second lower addition half-stage receiving the third sequence $(x_j^3)$, $0 \leqq j \leqq \frac{N}{8}-1$, in which

$$x_j^3 = y_{4j+2} + y_{4j+1},$$

the fourth sequence $(x_j^1)$, $0 \leqq j \leqq \frac{N}{4}-1$, in which $x_j^1 = y_{4j}$ for $j \leqq \frac{N}{8}-1$ and

$$x_j^1 = -y_{N-4j-1}$$

for $j > \frac{N}{8}-1$, and the fifth sequence $(x_j^2)$, $0 \leqq j \leqq \frac{N}{8}-1$ in which

$$x_j^2 = y_{4j+2} - y_{4j+1},$$

and a final adder stage receiving the first sequence $(x_j^0)$ and the second sequence $(y_i)$ and supplying the sequence $(x_j)$, $0 \leqq j \leqq N-1$, in which

$$x_i^0 = x_i + x_{N-1-i}$$

and $y_i = x_i x_{N-1-i}$.

**11.** Circuit according to claim 10, characterized in that it comprises a memory of at least N storage cells between the first adder stage and the groups of upper and lower half-stages and a memory of at least $\frac{N}{2}$ storage cells between each half-stage.

**12.** Circuit according to claim 10, characterized in that it comprises a double memory having two series of at least N storage cells between the first adder stage and the groups of upper and lower half-stages and a double memory having two series of at least $\frac{N}{2}$ storage cells between each half stage.

**13.** Circuit according to either of the claims 11 and 12, characterized in that it also comprises a memory with at least N storage cells in front of the first stage.

**Patentansprüche**

**1.** Schaltung zur schnellen Berechnung der Kosinustransformierten $(X_i)$, $0 \leqq i \leqq N-1$, mit $N = 2^n$ und $n \geqq 4$, eines durch eine Folge $(x_i)$, $0 \leqq i \leqq N-1$, definierten diskreten Signals, dadurch gekennzeichnet, daß sie Standardgraphen (Fig. 3a, 4a, 5a) verwendet und dadurch, daß sie dafür enthält:

- eine erste Addierstufe, die die Folge $(x_j)$, $0 \leqq j \leqq N-1$, empfängt und eine erste Folge $(x_j^0)$, $0 \leqq j \leqq \frac{N}{2}-1$, mit

$$x_j^0 = x_j + x_{N-1-j}$$

und eine zweite Folge $(y_j)$, $0 \leqq j \leqq \frac{N}{2}-1$, mit $y_j = x_j - x_{N-1-j}$ abgibt;
- eine Anordnung von in Reihe geschalteten oberen Halbstufen, wobei die erste obere Halbstufe die erste Folge $(x_j^0)$, $0 \leqq j \leqq \frac{N}{2}-1$, empfängt und die letzte obere Halbstufe die Folge $(X_{2q})$, $0 \leqq q \leqq \frac{N}{2}-1$, der Komponenten mit geradem Index der Kosinustransformierten abgibt, wobei das an jedem Ausgang jeder Halbstufe abgegebene Signal durch Linearkombination von höchstens zwei an jeden ihrer Eingänge angelegten Signalen erhalten wird, wobie die Anordnung von oberen Halbstufen durch Rekursion über die Größe N definiert ist, wobei die genannte Anordnung von oberen Halbstufen eine Schaltung zur Kosinustransformation für N/2 Punkte darstellt und wobei die genannte Schaltung für N = 8 eine Addierstufe, eine Multiplizierstufe, eine Addierstufe und eine Multiplizierstufe in Reihe geschaltet umfaßt:
- eine Anordnung von in Reihe geschalteten unteren Halbstufen, wobei die erste untere Halbstufe die zweite Folge $(y_j)$, $0 \leqq j \leqq \frac{N}{2}-1$, empfängt und die letzte untere Halbstufe die Folge $(X_{2q+1})$, $0 \leqq q \leqq \frac{N}{2}-1$, der Komponenten mit ungeradem Index der Kosinustransformierten abgibt, wobei das an jedem Ausgang jeder Halbstufe abgegebene Signal durch Linearkombination von höchstens zwei an jeden ihrer Eingänge angelegten Signalen erhalten wird, wobei die Anordnung von unteren Halbstufen in Reihe geschaltet umfaßt:

a) eine erste untere Halbstufe zur Addition, die eine dritte Folge $(x_j^3)$, $0 \leqq j \leqq \frac{N}{8}-1$, mit

$$x_j^3 = y_{4j+2} + y_{4j+1}$$

abgibt, eine vierte Folge $(x_j^1)$, $0 \leqq j \leqq \frac{N}{4}-1$,

$$x_j^1 = y_{4j},$$

für $j \leqq \frac{N}{8}-1$ und

$$x_j^1 = -y_{N-4j-1},$$

für $j>\frac{N}{8}-1$, sowie eine fünfte Folge $(x_j^2)$, $0\leq j\leq\frac{N}{8}-1$, mit

$$x_j^2=y_{4j+2}-y_{4j+1}.$$

b) eine Reihe von unteren Halbstufen zur Addition oder Multiplikation, die eine sechste Folge $(\alpha_{2q+1})$,$0\leq q\leq\frac{N}{8}-1$, abgibt, die den Realteilen der Komponenten mit ungeradem Index der Fourier-Transformierten des Grades $\frac{N}{2}$ der vierten Folge gleich ist, eine siebte Folge $(\beta_{2q+1})$, $0\leq q\leq\frac{N}{8}-1$, die den Imaginärteilen der Komponenten mit ungeradem Index der Fourier-Transformierten des Grades $\frac{N}{2}$ der vierten Folge gleich ist, eine achte Folge $(\delta_{2q+1})$, $0\leq q\leq\frac{N}{8}-1$, die den Komponenten mit ungeradem Index der Sinus-Transformierten des Grades $\frac{N}{4}$ der fünften Folge gleich ist, eine neunte Folge $(\gamma_{2q+1})$, $0\leq q\leq\frac{N}{8}-1$, die den Komponenten mit ungeradem Index der Kosinus-Transformierten des Grades $\frac{N}{4}$ der dritten Folge gleich ist,

c) eine zweite untere Halbstufe zur Addition, um die Folgen $(\alpha_{2q+1}+\gamma_{2q+1})$, $0\leq q\leq\frac{N}{8}-1$, $(\alpha_{2q+1}-\gamma_{2q+1})$, $0\leq q\leq\frac{N}{8}-1$, $(\beta_{2q+1}+\delta_{2q+1})$, $0\leq q\leq\frac{N}{8}-1$, und $(\beta_{2q+1}-\delta_{2q+1})$, $0\leq q\leq\frac{N}{8}-1$, zu bilden,

d) eine untere Halbstufe zur Multiplikation, die die Folge $(X_{2q+1})$, $0\leq q\leq\frac{N}{2}-1$, der Komponenten mit ungeradem Index der Kosinustransformierten N-ten Grades der Folge $(x_j)$, $0\leq j\leq N-1$, abgibt.

**2.** Schaltung gemäß Patentanspruch 1, dadurch gekennzeichnet, daß die Anordnungen der oberen und unteren Halbstufen dieselbe Anzahl Halbstufen zur Addition enthalten.

**3.** Schaltung gemäß irgendeinem der Patentansprüche 1 und 2, dadurch gekennzeichnet, daß die Anordnung oberer Halbstufen und die Anordnung unterer Halbstufen dieselbe Anzahl Halbstufen zur Multiplikation enthalten, wobei gewisse Halbstufen zur Multiplikation gegebenenfalls der Identitätsoperation gleich sind.

**4.** Schaltung gemäß irgendeinem der Patentansprüche 2 und 3, dadurch gekennzeichnet, daß eine obere Halbstufe eines bestimmtem Ranges und die untere Halbstufe gleichem Ranges derselben Art sind, d.h. beide Addierstufen oder beide Multiplizierstufen.

**5.** Schaltung gemäß irgendeinem der Patentansprüche 1 bis 4, dadurch gekennzeichnet, daß die Folge unterer Halbstufen, die die sechste Folge abgibt, die den Realteilen der Komponenten mit ungeradem Index der Fourier-Transformierten des Grades $\frac{N}{2}$ der vierten Folge gleich ist, aus Addierstufen und Multiplizierstufen besteht, deren Anzahl, Reihenfolge und Art die einer Schaltung zur Kosinustransformation einer Folge von $\frac{N}{4}$ Punkten sind, wobei die genannte Schaltung für $N=4$ eine Addierstufe und eine Multiplizierstufe enthält.

**6.** Schaltung gemäß irgendeinem der Patentansprüche 1 bis 5, dadurch gekennzeichnet, daß jede Gesamtheit von Halbstufen n-2 Halbstufen zur Addition und

$$E\left(\frac{n+1}{2}\right)$$

Multiplizierstufen enthält, wobei E die Funktion "ganzzahliger Anteil" ist, wobei gewisse Halbstufen zur Multiplikation gegebenenfalls der Identitätsoperation gleich sind.

**7.** Schaltung gemäß irgendeinem der Patentansprüche 1 bis 6, dadurch gekennzeichnet, daß sie einen Speicher mit mindestens N Speicherplätzen zwischen der ersten Addierstufe und den Anordnungen von oberen und unteren Halbstufen enthält und einen Speicher mit mindestens $\frac{N}{2}$ Speicherplätzen zwischen jeder Halbstufe.

**8.** Schaltung gemäß irgendeinem der Patentansprüche 1 bis 6, dadurch gekennzeichnet, daß sie einen Doppelspeicher mit zwei Reihen von mindestens N Speicherplätzen zwischen der ersten Addierstufe und den Anordnungen von oberen und unteren Halbstufen enthält und einen Doppelspeicher mit zwei Reihen von mindestens $\frac{N}{2}$ Speicherplätzen zwischen jeder Halbstufe.

**9.** Schaltung gemäß irgendeinem der Patentansprüche 7 und 8, dadurch gekennzeichnet, daß sie darüber

hinaus einen Speicher mit mindestens N Speicherplätzen vor der ersten Stufe enthält.

**10.** Schaltung zur schnellen Berechnung der inversen Kosinustransformierten ($x_i$), $0 \leq i \leq N-1$, wobei die direkte Transformierte in den Patentansprüchen 1 bis 9 definiert wurde, eines diskreten Signals, definiert durch eine Folge ($X_i$), $0 \leq i \leq N-1$, wo $N = 2^n$ und n eine Zahl größer oder gleich 4 ist, dadurch gekennzeichnet, daß sie Standardgraphen (Fig. 3a, 4a, 5a) invers verwendet und dadurch, daß sie dafür enthält:

- eine Anordnung von oberen Halbstufen, die die Folge ($X_{2q}$), $0 \leq q \leq \frac{N}{2} -1$, der Komponenten mit geradem Index der Kosinustransformierten empfängt und die erste Folge ($x_j^0$ ), $0 \leq j \leq \frac{N}{2} -1$, abgibt, wobei die Anordnung von oberen Halbstufen durch Rekursion über die Größe N definiert ist und wobei die genannte Anordnung von oberen Halbstufen eine Schaltung zur inversen Kosinustransformation für N/2 Punkte darstellt:
- eine Anordnung von unteren Halbstufen, die die Folge ($X_{2q+1}$), $0 \leq q \leq \frac{N}{2} -1$, der Komponenten mit ungeradem Index der Kosinustransformierten empfängt und die zweite Folge ($x_j^1$ ), $0 \leq j \leq \frac{N}{2} -1$, abgibt, wobei die Anordnung von unteren Halbstufen in Reihe geschaltet umfaßt;

  a) eine untere Halbstufe zur Multiplikation, die die Folge ($X_{2q+1}$), $0 \leq q \leq \frac{N}{2} -1$, der Komponenten mit ungeradem Index der Kosinustransformierten N-ten Grades der Folge ($x_j$), $0 \leq j \leq N-1$, empfängt,

  b) eine erste untere Halbstufe zur Addition, die die Folgen ($\alpha_{2q+1} + \gamma_{2q+1}$), $0 \leq q \leq \frac{N}{8} -1$, ($\alpha_{2q+1} - \gamma_{2q+1}$), $0 \leq q \leq \frac{N}{8} -1$, ($\beta_{2q+1} + \delta_{2q+1}$), $0 \leq q \leq \frac{N}{8} -1$, und ($\beta_{2q+1} - \delta_{2q+1}$), $0 \leq q \leq \frac{N}{8} -1$, empfängt.

  c) eine Reihe von unteren Halbstufen zur Addition oder Multiplikation, die die sechste Folge ($\alpha_{2q+1}$),$0 \leq q \leq \frac{N}{8} -1$, empfängt, die den Realteilen der Komponenten mit ungeradem Index der Fourier-Transformierten des Grades $\frac{N}{2}$ der vierten Folge gleich ist, die siebte Folge ($\beta_{2q+1}$), $0 \leq q \leq \frac{N}{8} -1$, die den Imaginärteilen der Komponenten mit ungeradem Index der Fourier-Transformierten des Grades $\frac{N}{2}$ der vierten Folge gleich ist, die achte Folge ($\delta_{2q+1}$), $0 \leq q \leq \frac{N}{8} -1$, die den Komponenten mit ungeradem Index der Sinus-Transformierten des Grades $\frac{N}{4}$ der fünften Folge gleich ist, die neunte Folge ($\gamma_{2q+1}$), $0 \leq q \leq \frac{N}{8} -1$, die den Komponenten mit ungeradem Index der Kosinus-Transformierten des Grades $\frac{N}{4}$ der dritten Folge gleich ist.

  d) eine zweite untere Halbstufe zur Addition, die die dritte Folge ($x_j^3$ ), $0 \leq j \leq \frac{N}{8} -1$, mit

$$x_j^3 = y_{4j+2} + y_{4j+1}$$

  empfängt, die vierte Folge ($x_j^1$ ), $0 \leq j \leq \frac{N}{4} -1$,

$$x_j^1 = y_{4j}.$$

  für $j \leq \frac{N}{8} -1$ und

$$x_j^1 = -y_{N-4j-1},$$

  für $j > \frac{N}{8} -1$, sowie die fünfte Folge

$$(x_j^2),\ 0 \leq j \leq \frac{N}{8} -1,$$

  mit

$$x_j^2 = y_{4j+2} - y_{4j+1}.$$

  und

- eine letzte Addierstufe, die die erste Folge ($x_j^0$ ) und die zweite Folge ($y_j$) empfängt und eine Folge ($x_j$), $0 \leq j \leq N-1$, abgibt, mit

$$x_j^0 = x_j + x_{N-1-j}$$

und $y_j = x_j - x_{N-1-j}$ .

**11.** Schaltung gemäß Patentanspruch 10, dadurch gekennzeichnet, daß sie einen Speicher mit mindestens N Speicherplätzen zwischen der ersten Addierstufe und den Anordnungen von oberen und unteren Halbstufen enthält und einen Speicher mit mindestens $\frac{N}{2}$ Speicherplätzen zwischen jeder Halbstufe.

**12.** Schaltung gemäß Patentanspruch 10, dadurch gekennzeichnet, daß sie einen Doppelspeicher mit zwei Reihen von mindestens N Speicherplätzen zwischen der ersten Addierstufe und den Anordnungen von oberen und unteren Halbstufen enthält und einen Doppelspeicher mit zwei Reihen von mindestens $\frac{N}{2}$ Speicherplätzen zwischen jeder Halbstufe.

**13.** Schaltung gemäß irgendeinem der Patentansprüche 11 und 12, dadurch gekennzeichnet, daß sie darüber hinaus einen Speicher mit mindestens N Speicherplätzen vor der ersten Stufe enthält.

| n | $N=2^n$ | CHEN | | | INV. | | |
|---|---|---|---|---|---|---|---|
| | | ⊗ | ⊕ | E | ⊗ | ⊕ | E |
| 2 | 4 | 1 | 1 | 2 | 1 | 1 | 2 |
| 3 | 8 | 2 | 2 | 4 | 2 | 2 | 4 |
| 4 | 16 | 3 | 3 | 6 | 2 | 3 | 5 |
| 5 | 32 | 4 | 4 | 8 | 3 | 4 | 7 |
| 6 | 64 | 5 | 5 | 10 | 3 | 5 | 8 |

FIG.1

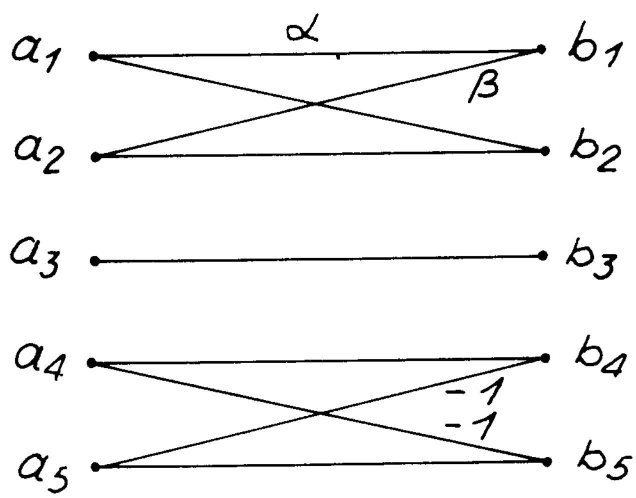


FIG.2

FIG.3a

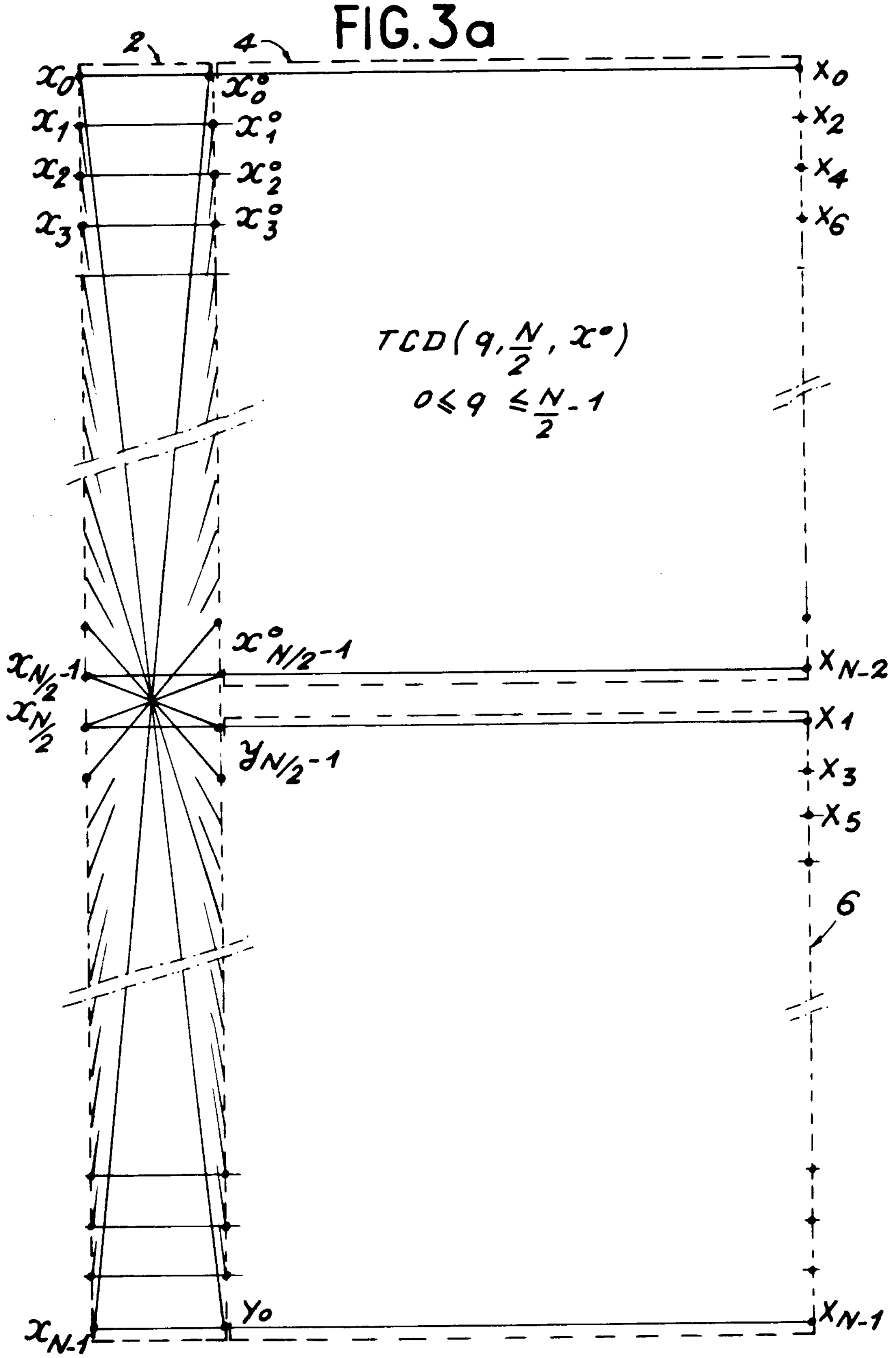
2
4
$x_0$
$x_1$
$x_2$
$x_3$
$x^o_0$
$x^o_1$
$x^o_2$
$x^o_3$
$X_0$
$X_2$
$X_4$
$X_6$
TCD(q, N/2, x°)
0 ≤ q ≤ N/2 - 1
$x^o_{N/2-1}$
$x_{N/2-1}$
$x_{N/2}$
$y_{N/2-1}$
$X_{N-2}$
$X_1$
$X_3$
$X_5$
6
$y_0$
$x_{N-1}$
$X_{N-1}$

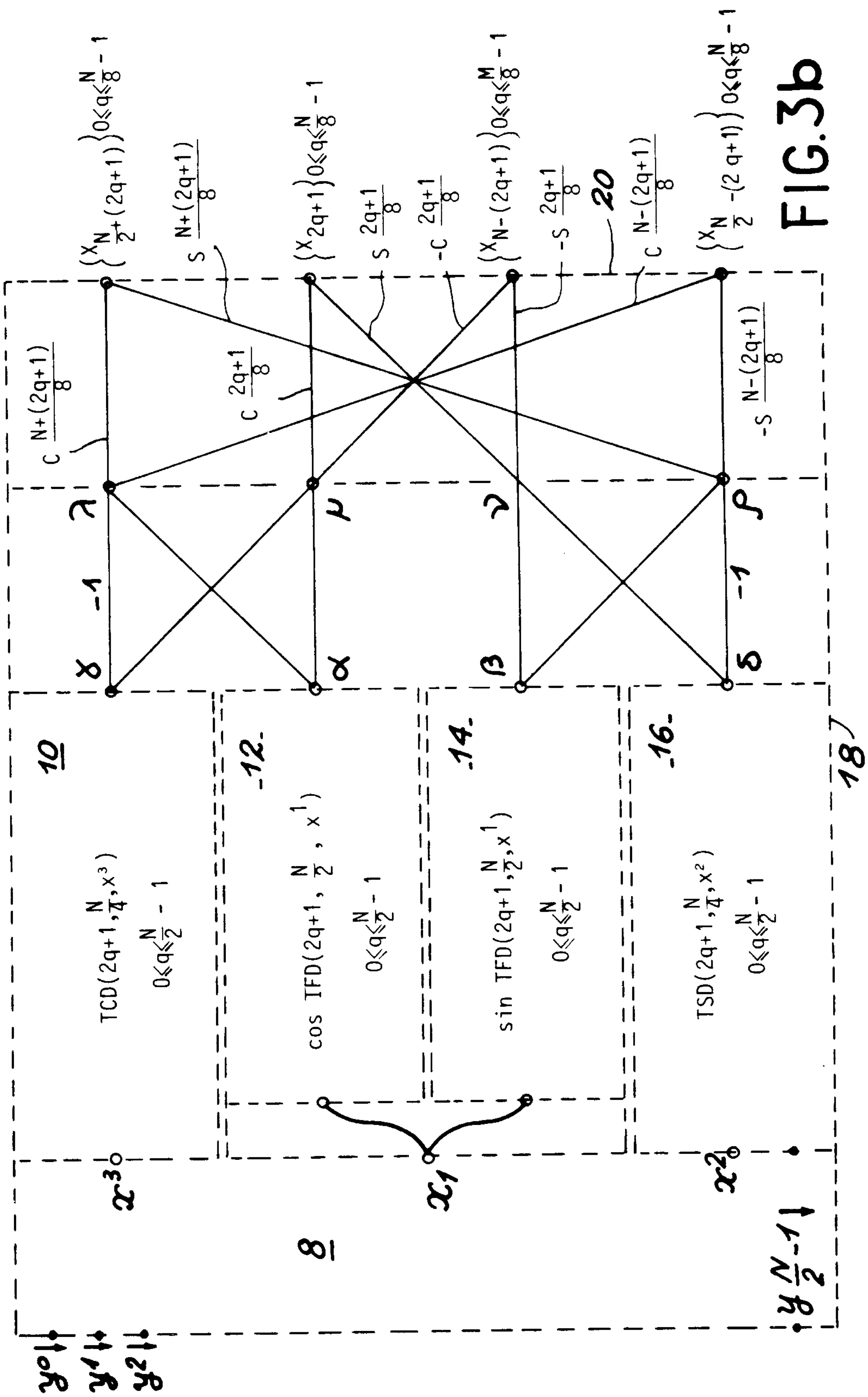
TCD(2q+1, N/4, x³)
0≤q≤N/2 - 1
cos TFD(2q+1, N/2, x¹)
0≤q≤N/2 - 1
sin TFD(2q+1, N/2, x¹)
0≤q≤N/2 - 1
TSD(2q+1, N/4, x²)
0≤q≤N/2 - 1
10
12
14
16
18
20
8
-1
-1
c (N+(2q+1))/8
c (2q+1)/8
-s (N-(2q+1))/8
s (N+(2q+1))/8
s (2q+1)/8
-c (2q+1)/8
-s (2q+1)/8
c (N-(2q+1))/8
{X N/2+(2q+1)} 0≤q≤N/8 - 1
{X 2q+1} 0≤q≤N/8 - 1
{X N-(2q+1)} 0≤q≤M/8 - 1
{X N/2-(2q+1)} 0≤q≤N/8 - 1

FIG.3b

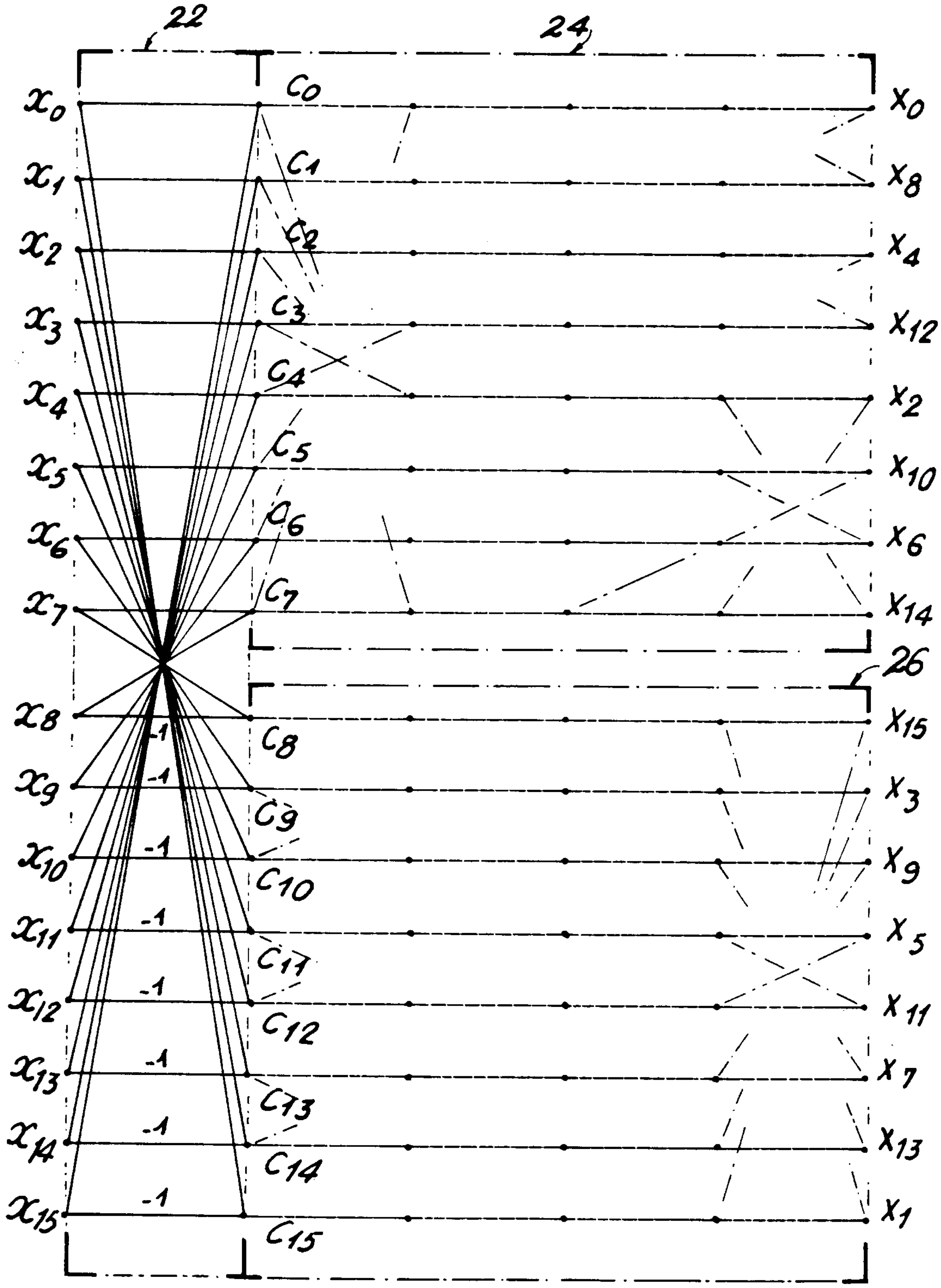
22
24
26
x0
x1
x2
x3
x4
x5
x6
x7
x8
x9
x10
x11
x12
x13
x14
x15
C0
C1
C2
C3
C4
C5
C6
C7
C8
C9
C10
C11
C12
C13
C14
C15
-1
-1
-1
-1
-1
-1
-1
-1
X0
X8
X4
X12
X2
X10
X6
X14
X15
X3
X9
X5
X11
X7
X13
X1

FIG.4a

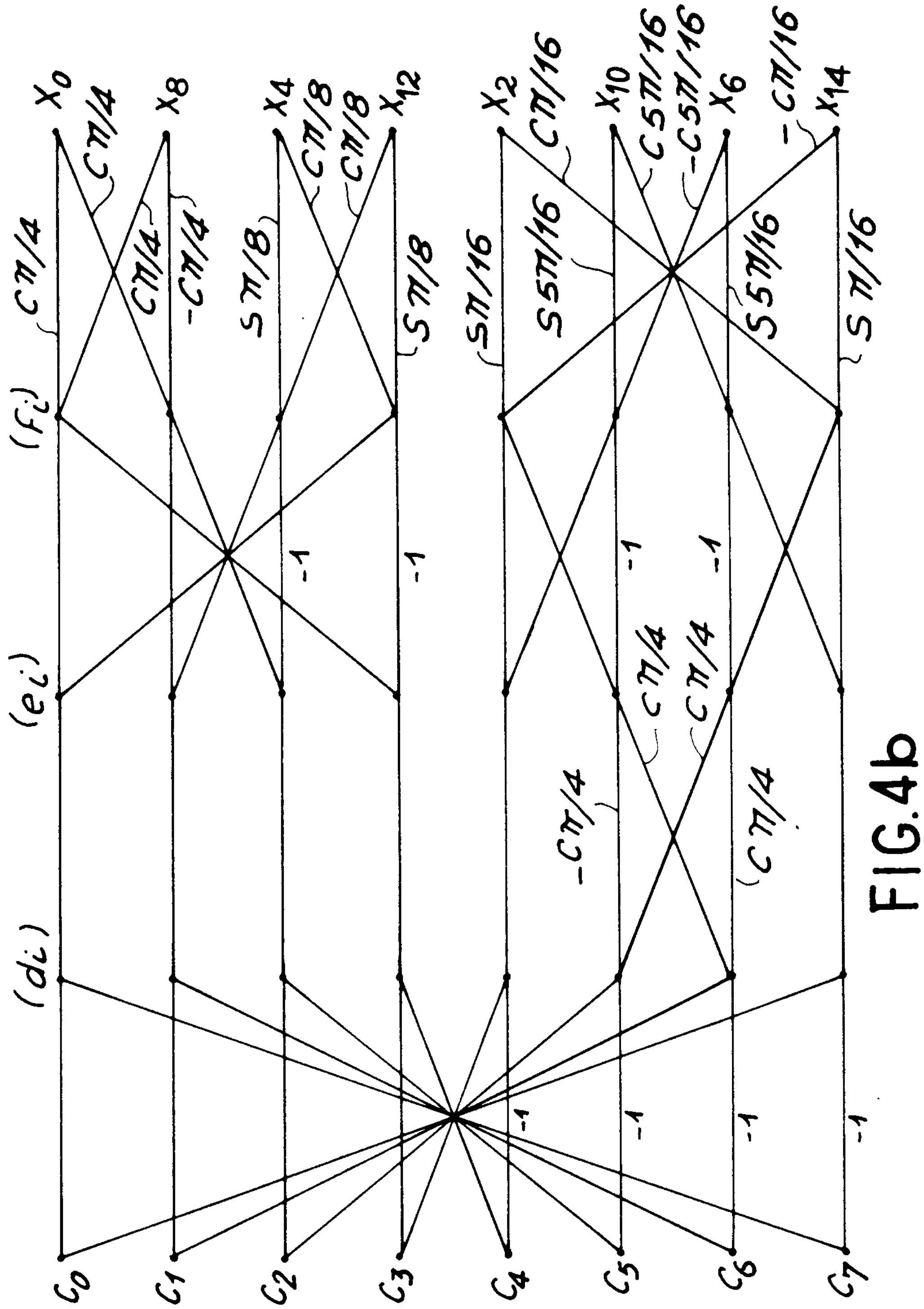
X0
X8
X4
X12
X2
X10
X6
X14
(fi)
(ei)
(di)
Cπ/4
-Cπ/4
Cπ/8
Sπ/8
Cπ/16
-Cπ/16
C5π/16
-C5π/16
S5π/16
Sπ/16
-1
C0
C1
C2
C3
C4
C5
C6
C7

FIG.4b

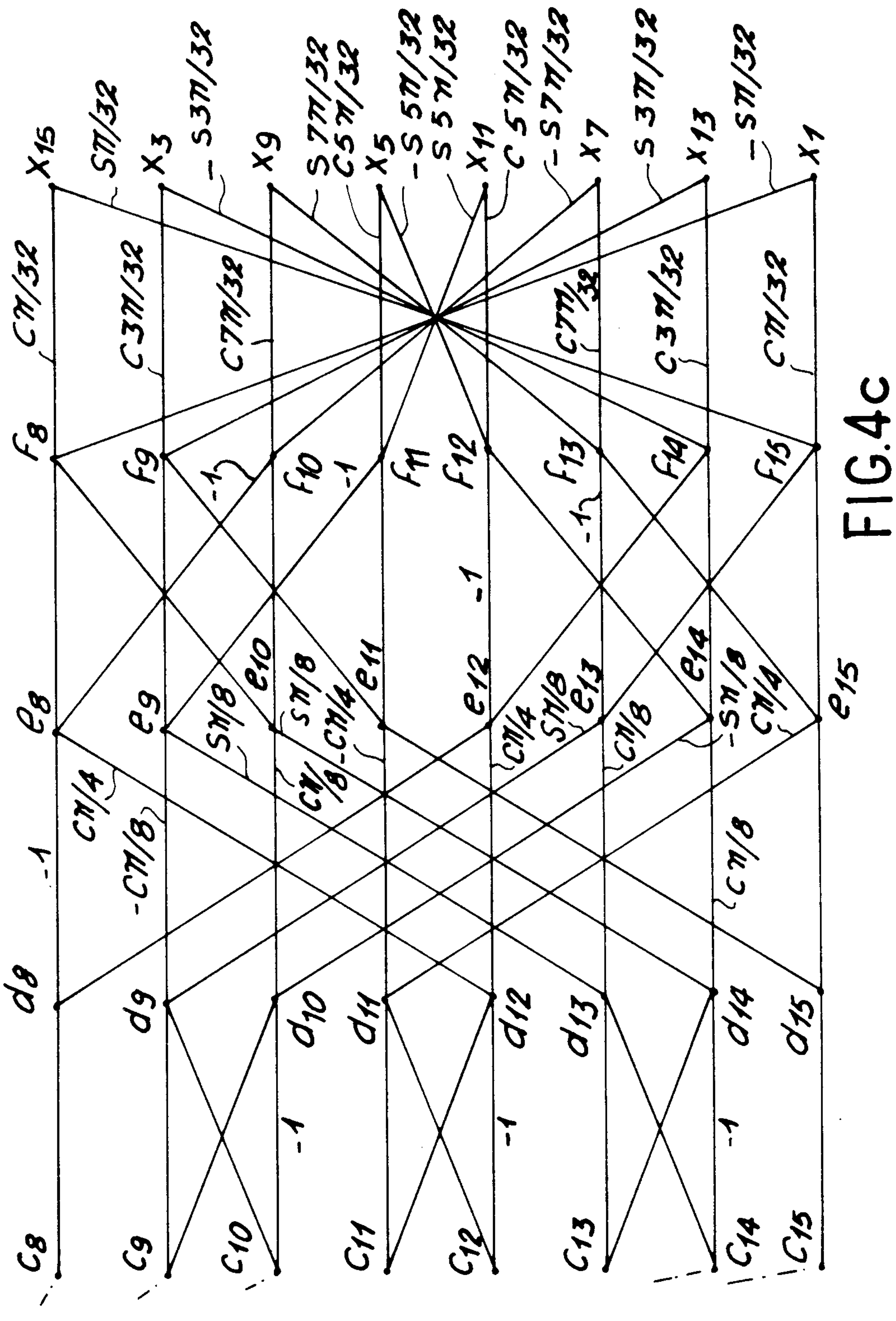
X15
X3
X9
X5
X11
X7
X13
X1
f8
f9
f10
f11
f12
f13
f14
f15
e8
e9
e10
e11
e12
e13
e14
e15
d8
d9
d10
d11
d12
d13
d14
d15
C8
C9
C10
C11
C12
C13
C14
C15

FIG.4c

FIG.5a

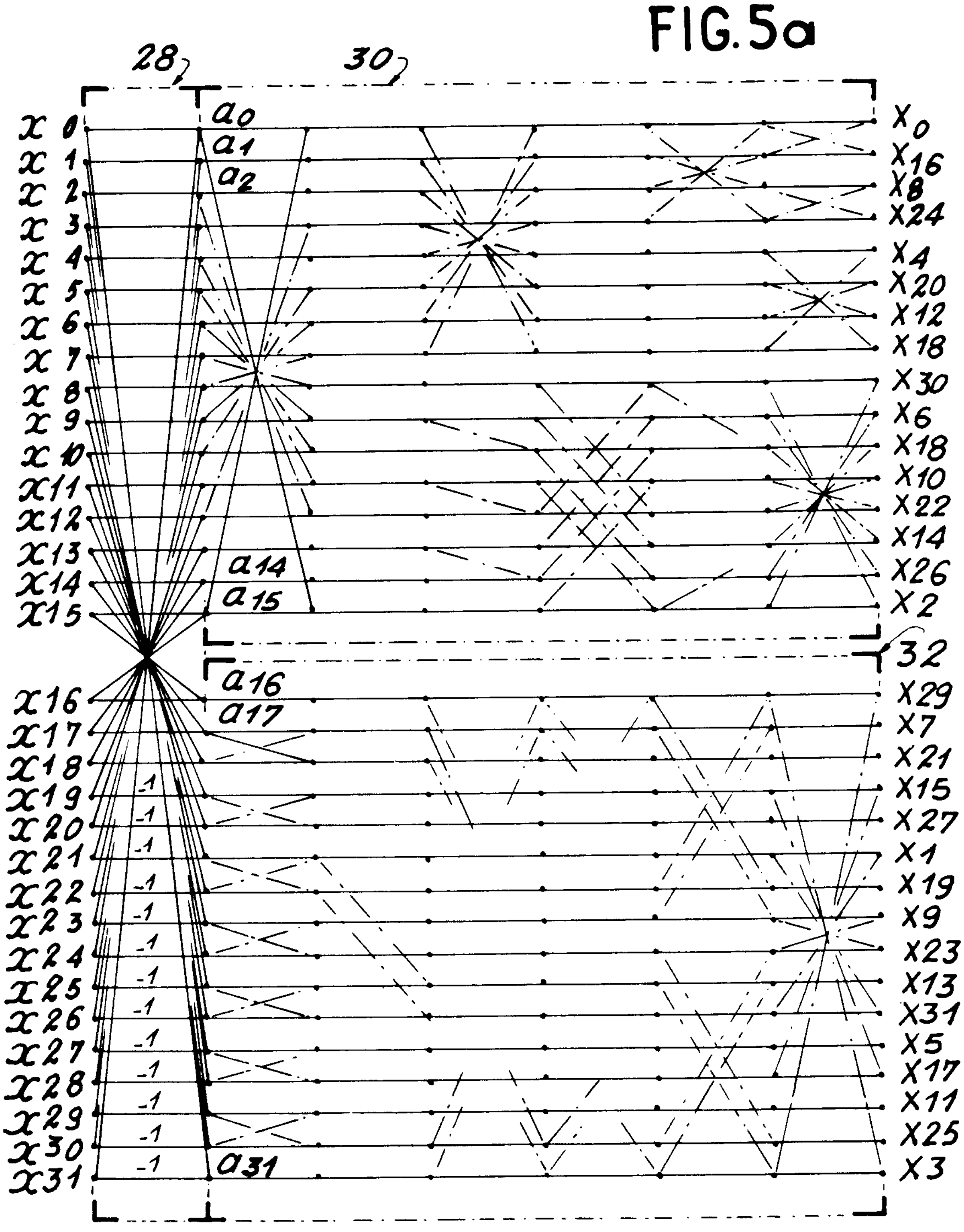
28
30
32
x0
x1
x2
x3
x4
x5
x6
x7
x8
x9
x10
x11
x12
x13
x14
x15
x16
x17
x18
x19
x20
x21
x22
x23
x24
x25
x26
x27
x28
x29
x30
x31
a0
a1
a2
a14
a15
a16
a17
a31
-1
X0
X16
X8
X24
X4
X20
X12
X18
X30
X6
X18
X10
X22
X14
X26
X2
X29
X7
X21
X15
X27
X1
X19
X9
X23
X13
X31
X5
X17
X11
X25
X3

FIG.5b

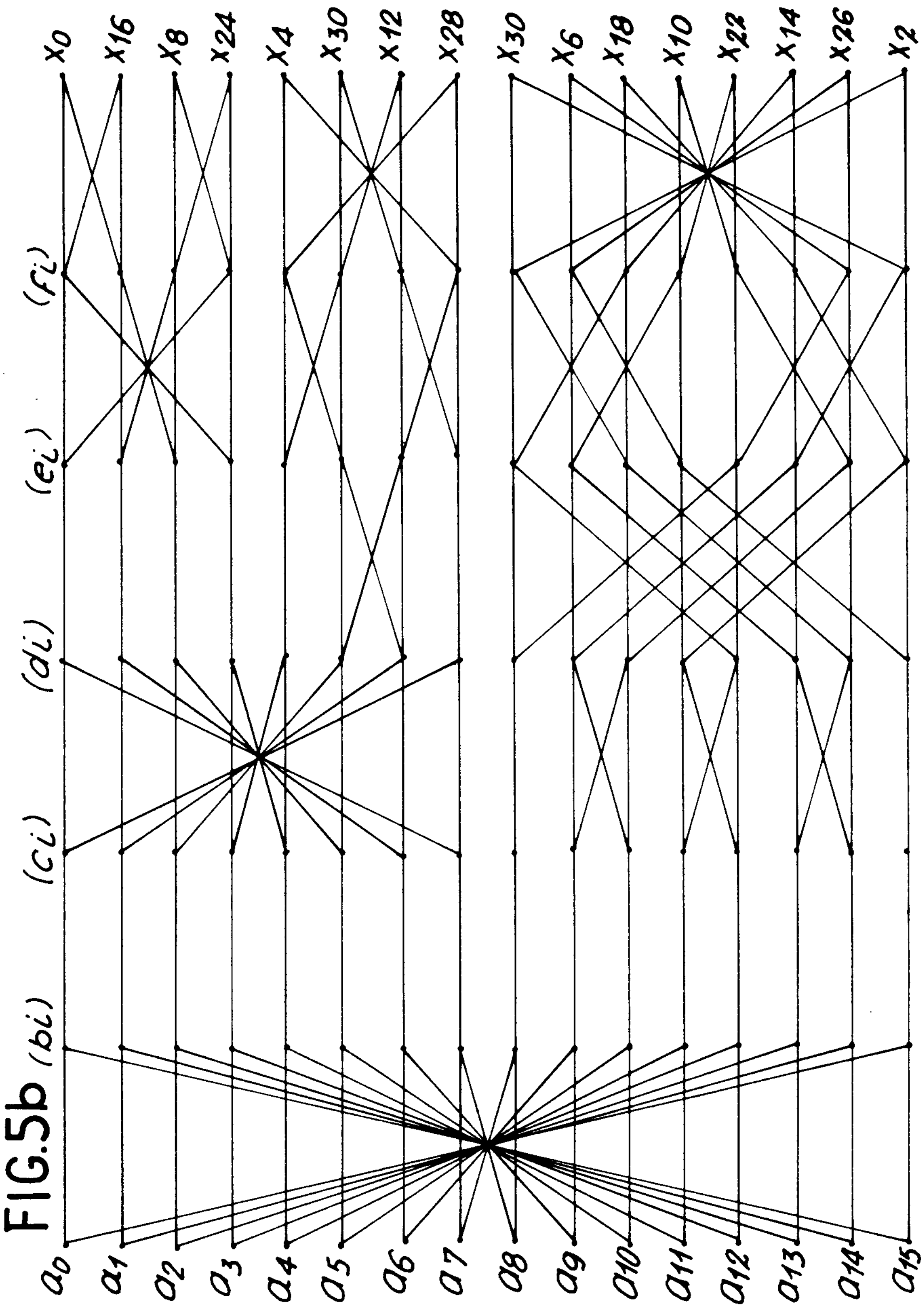
x0
x16
x8
x24
x4
x30
x12
x28
x30
x6
x18
x10
x22
x14
x26
x2
(fi)
(ei)
(di)
(ci)
(bi)
a0
a1
a2
a3
a4
a5
a6
a7
a8
a9
a10
a11
a12
a13
a14
a15

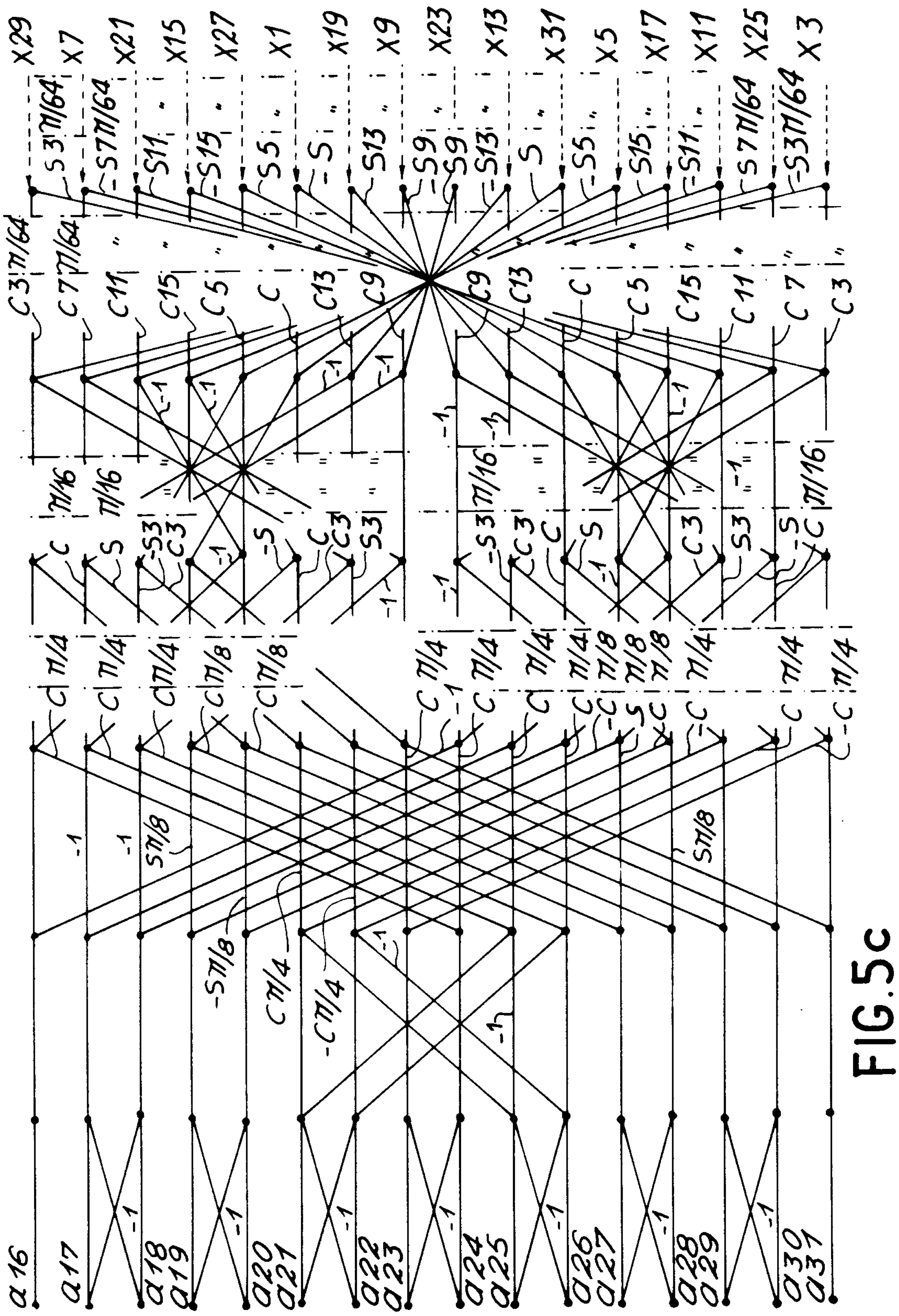
a16
a17
a18
a19
a20
a21
a22
a23
a24
a25
a26
a27
a28
a29
a30
a31
X29
X7
X21
X15
X27
X1
X19
X9
X23
X13
X31
X5
X17
X11
X25
X3

FIG.5c

FIG.6

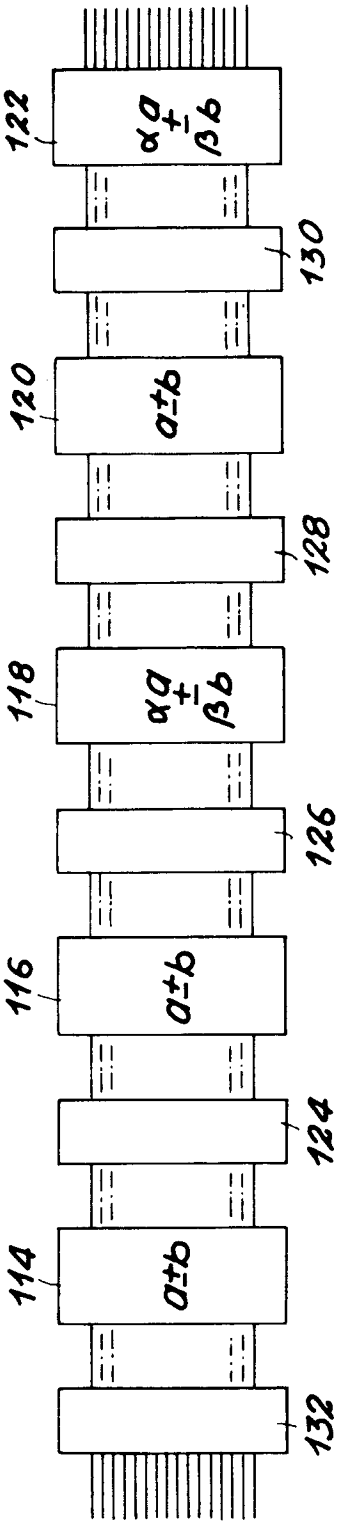
122
αa ± βb
130
120
a±b
128
118
αa ± βb
126
116
a±b
124
114
a±b
132

FIG.12

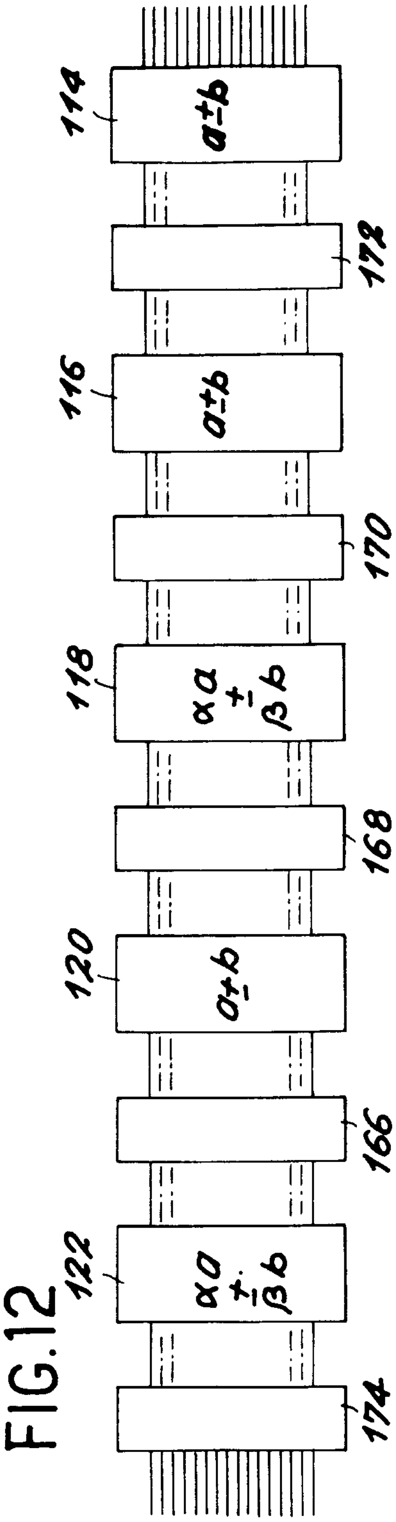
114
a±b
172
116
a±b
170
118
αa ± βb
168
120
a±b
166
122
αa ± βb
174

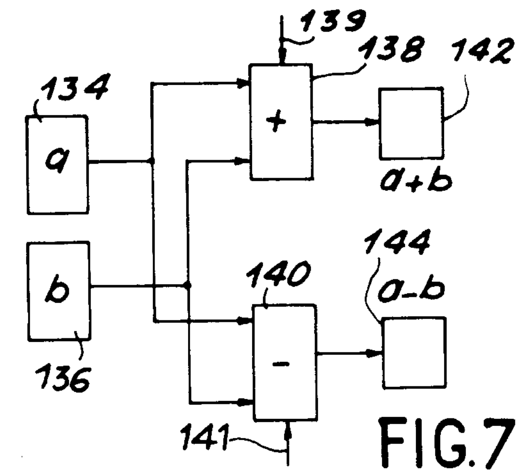


FIG.7

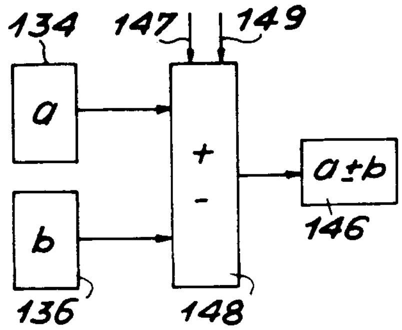


FIG.8

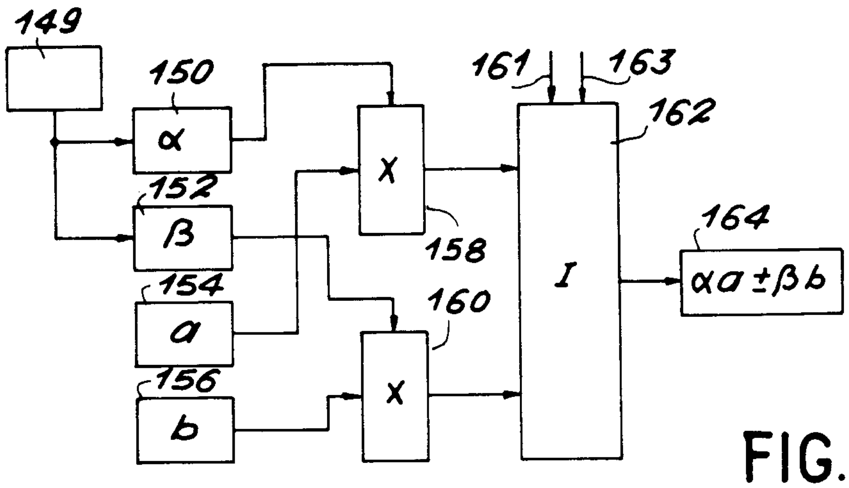


FIG.9

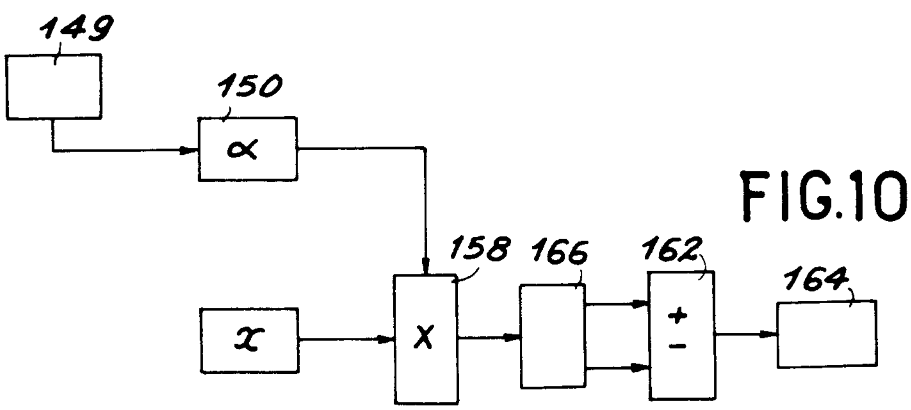


FIG.10

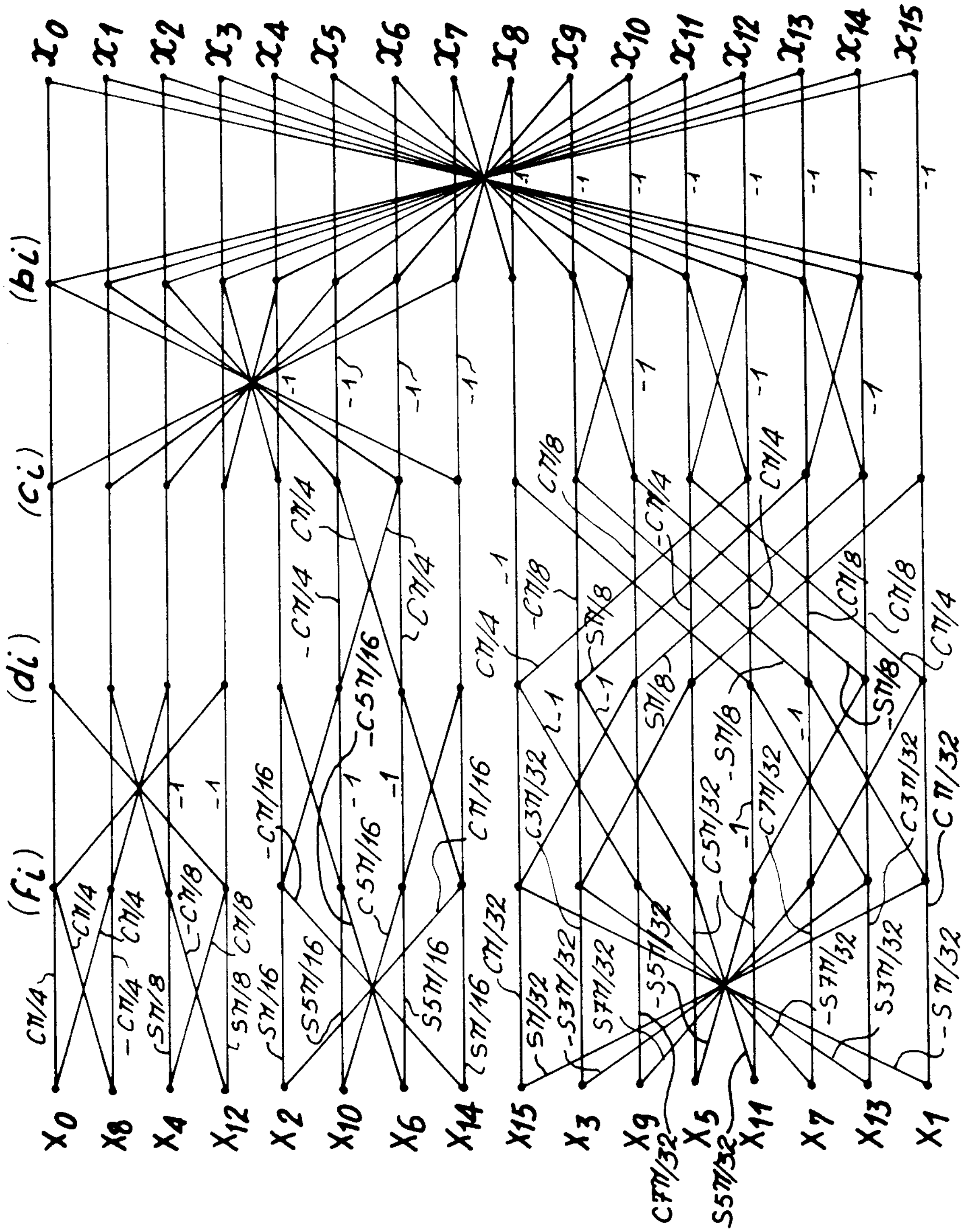
x0
x1
x2
x3
x4
x5
x6
x7
x8
x9
x10
x11
x12
x13
x14
x15
(bi)
(ci)
(di)
(fi)
X0
X8
X4
X12
X2
X10
X6
X14
X15
X3
X9
X5
X11
X7
X13
X1

FIG.11